(19) Europäisches Patentamt
European Patent Office
Office européen des brevets

(11) **EP 4 542 281 A1**

(12) **EUROPEAN PATENT APPLICATION**
published in accordance with Art. 153(4) EPC

(43) Date of publication:
**23.04.2025 Bulletin 2025/17**

(21) Application number: **23823458.7**

(22) Date of filing: **24.02.2023**

(51) International Patent Classification (IPC):
**G02B 15/20** (2006.01)   **G02B 13/16** (2006.01)
**G02B 15/167** (2006.01)

(52) Cooperative Patent Classification (CPC):
**G02B 13/16; G02B 15/167; G02B 15/20**

(86) International application number:
**PCT/JP2023/006792**

(87) International publication number:
**WO 2023/243154 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2022 JP 2022097551**

(71) Applicant: **Panasonic Intellectual Property
Management Co., Ltd.
Kadoma-shi, Osaka 571-0057 (JP)**

(72) Inventor: **IMAOKA, Takuya
Osaka 571-0057 (JP)**

(74) Representative: **Eisenführ Speiser
Patentanwälte Rechtsanwälte PartGmbB
Gollierstraße 4
80339 München (DE)**

(54) **OPTICAL SYSTEM, IMAGE PROJECTION DEVICE, AND IMAGING DEVICE**

(57) The present disclosure is directed to an optical system internally having an intermediate imaging position MI that is conjugate with each of a magnification conjugate point on a magnification side and a reduction conjugate point on a reduction side, the optical system comprising: a magnification optical system Op including a plurality of lens elements and positioned on the magnification side with respect to the intermediate imaging position MI; and a relay optical system Ol including a plurality of lens elements and positioned on the reduction side with respect to the intermediate imaging position MI; wherein a first lens element L1 positioned closest to the magnification side of the magnification optical system Op has a positive power, and the optical system satisfies the following condition (1): $0.9 \le f1/f2 \le 1.5 \cdots (1)$, where f1 is a focal length of the magnification optical system Op, and f2 is a focal length of the relay optical system Ol.

Fig. 1

EP 4 542 281 A1

**Description**

TECHNICAL FIELD

The present disclosure relates to an optical system that forms an intermediate image. The present disclosure also relates to an image projection apparatus and an imaging apparatus using such an optical system.

BACKGROUND ART

Intermediate imaging-based optical systems have an advantage of achieving wide-angle projection with a short focal length and a wide screen. However, as the field of view is wider-angle, aberration fluctuation, such as field curvature aberration, astigmatism, etc., becomes larger during focus adjustment for an object distance, thereby possibly degrading the optical performance. Patent Document 1 discloses a wide-angle imaging optical system, wherein focus adjustment is preformed using two focus groups located on the magnification side with respect to the intermediate image. Patent Document 2 discloses a wide-angle imaging optical system, wherein focus adjustment is preformed using two or three focus groups.

PRIOR ART

[Patent Document 1] JP 2018-97046 A
[Patent Document 2] JP 2019-132904 A

SUMMARY OF THE INVENTION

The present disclosure provides an optical system in which it is easy to manufacture wide-angle lenses and reduce the distortion aberration, and a relatively longer back focus can be realized. The present disclosure also provides an image projection apparatus and an imaging apparatus using such an optical system.
An optical system according to the present disclosure internally has an intermediate imaging position that is conjugate with each of a magnification conjugate point on a magnification side and a reduction conjugate point on a reduction side, the optical system comprising:

a magnification optical system including a plurality of lens elements and positioned on the magnification side with respect to the intermediate imaging position; and
a relay optical system including a plurality of lens elements and positioned on the reduction side with respect to the intermediate imaging position;
wherein a first lens element positioned closest to the magnification side of the magnification optical system has a positive power, and
the optical system satisfies the following condition (1):

$$0.9 \leq f1/f2 \leq 1.5 \quad \cdots(1)$$

where f1 is a focal length of the magnification optical system, and f2 is a focal length of the relay optical system.

Further, an image projection apparatus according to the present disclosure includes the above-described optical system and an image forming element that generates an image to be projected through the optical system onto a screen.
Still further, an imaging apparatus according to the present disclosure includes the above-described optical system and an imaging element that receives an optical image formed by the optical system to convert the optical image into an electrical image signal.
The present disclosure provides an optical system in which it is easy to manufacture wide-angle lenses and reduce the distortion aberration, and a relatively longer back focus can be realized.

BRIEF DESCRIPTION OF THE DRAWINGS

Fig. 1 is a layout diagram showing an optical path at a wide-angle end in a zoom lens system of Example 1 for an object distance of 3000 mm.

Figs. 2A-2C are layout diagrams of the zoom lens system according to Example 1 for an object distance of 3000 mm.

Figs. 3A-3C are longitudinal aberration diagrams of the zoom lens system according to Example 1 for an object distance of 3000 mm.

Figs. 4A-4C are longitudinal aberration diagrams of the zoom lens system according to Example 1 for an object distance of 1800 mm.

Figs. 5A-5C are longitudinal aberration diagrams of the zoom lens system according to Example 1 for an object distance of 20000 mm.

Fig. 6 is a layout diagram showing an optical path at a wide-angle end in a zoom lens system of Example 2 for an object distance of 3000 mm.

Figs. 7A-7C are layout diagrams of the zoom lens system according to Example 2 for an object distance of 3000 mm.

Figs. 8A-8C are longitudinal aberration diagrams of the zoom lens system according to Example 2 for an object distance of 3000 mm.

Figs. 9A-9C are longitudinal aberration diagrams of the zoom lens system according to Example 2 for an object distance of 1800 mm.

Figs. 10A-10C are longitudinal aberration diagrams of the zoom lens system according to Example 2 for an object distance of 20000 mm.

Fig. 11 is a layout diagram showing an optical path at a wide-angle end in a zoom lens system of Example 3 for an object distance of 3000 mm.

Figs. 12A-12C are layout diagrams of the zoom lens system according to Example 3 for an object distance of 3000 mm.

Figs. 13A-13C are longitudinal aberration diagrams of the zoom lens system according to Example 3 for an object distance of 3000 mm.

Figs. 14A-14C are longitudinal aberration diagrams of the zoom lens system according to Example 3 for an object distance of 1800 mm.

Figs. 15A-15C are longitudinal aberration diagrams of the zoom lens system according to Example 3 for an object distance of 20000 mm.

Fig. 16 is a layout diagram showing an optical path at a wide-angle end in a zoom lens system of Example 4 for an object distance of 3000 mm.

Figs. 17A-17C are layout diagrams of the zoom lens system according to Example 4 for an object distance of 3000 mm.

Figs. 18A-18C are longitudinal aberration diagrams of the zoom lens system according to Example 4 for an object distance of 3000 mm.

Figs. 19A-19C are longitudinal aberration diagrams of the zoom lens system according to Example 4 for an object distance of 1800 mm.

Figs. 20A-20C are longitudinal aberration diagrams of the zoom lens system according to Example 4 for an object distance of 20000 mm.

FIG. 21 is a block diagram showing an example of an image projection apparatus according to the present disclosure.

FIG. 22 is a block diagram showing an example of an imaging apparatus according to the present disclosure.

Hereinafter, embodiments are described in detail with reference to the drawings as appropriate. However, unnecessarily detailed descriptions may be omitted. For example, detailed descriptions of well-known items or redundant descriptions of substantially the same configurations may be omitted. This is to prevent the following description from being unnecessarily redundant and to facilitate understanding by those skilled in the art.

It should be noted that the applicant provides the accompanying drawings and the following description for those skilled in the art to fully understand the present disclosure, and it is not intended to limit the subject matter described in the claims thereby.

Each example of an optical system according to the present disclosure is described below. In each example, described is an example in which the optical system is used in a projector (an example of an image projection apparatus) that projects onto a screen image light of an original image S obtained by spatially modulating incident light using an image forming element, such as liquid crystal or digital micromirror device (DMD), based on an image signal. In other words, the optical system according to the present disclosure can be used for magnifying the original image S on the image forming element arranged on the reduction side to project the image onto the screen (not shown), which is arranged on an extension line on the magnification side.

Further, the optical system according to the present disclosure can also be used for collecting light emitted from an object located on the extension line on the magnification side to form an optical image of the object on an imaging surface of an imaging element arranged on the reduction side.

(First Embodiment)

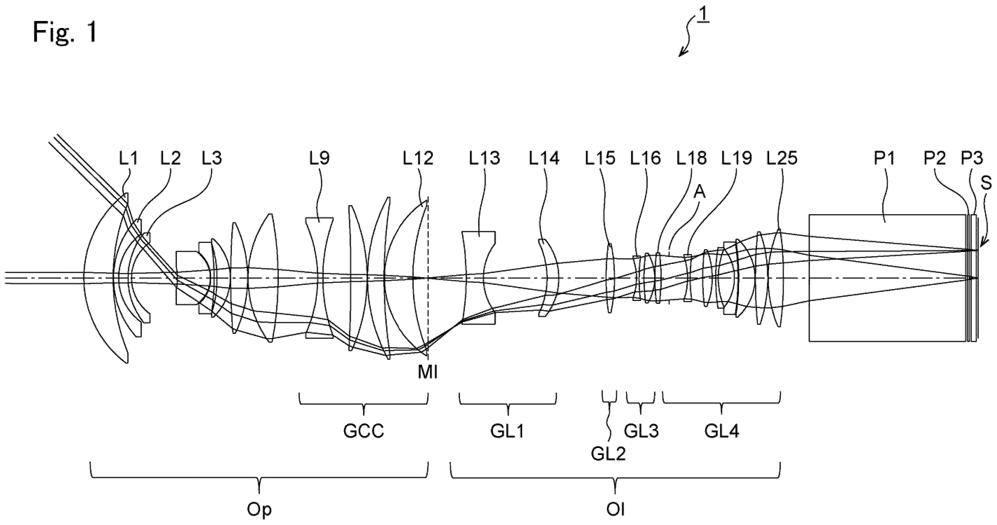

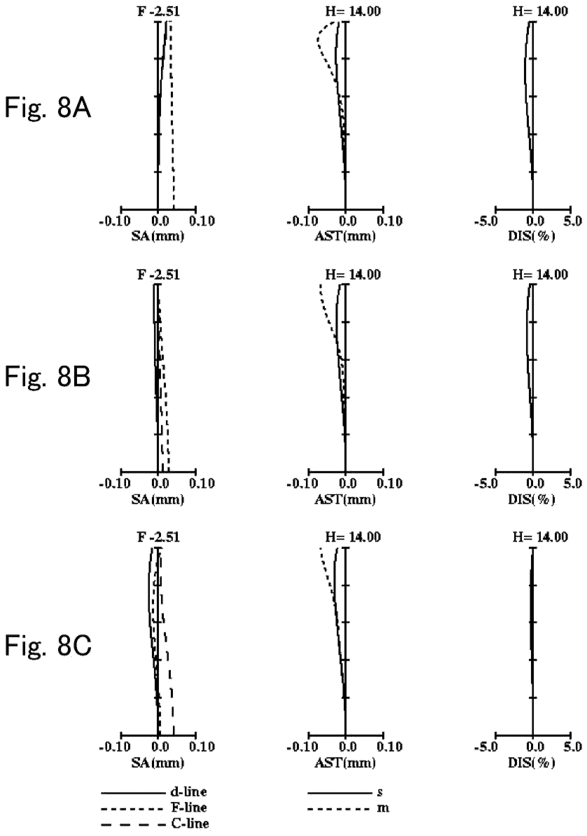

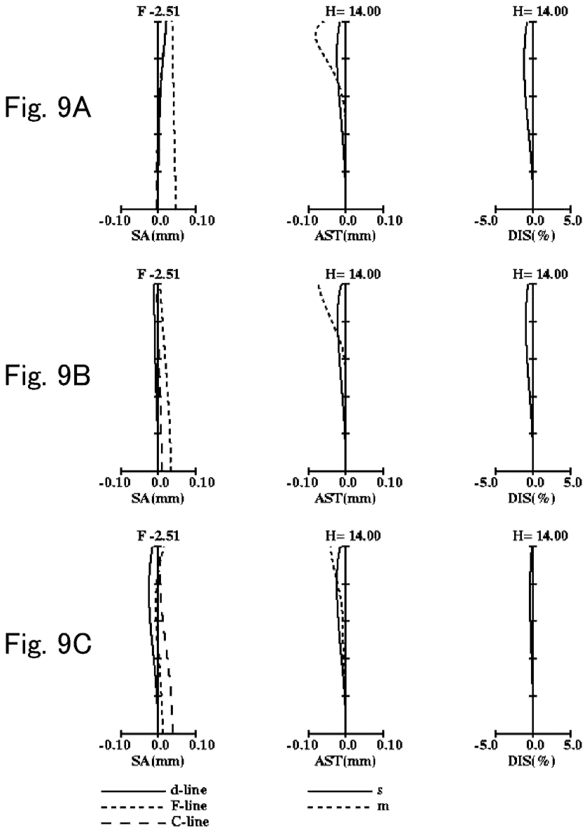

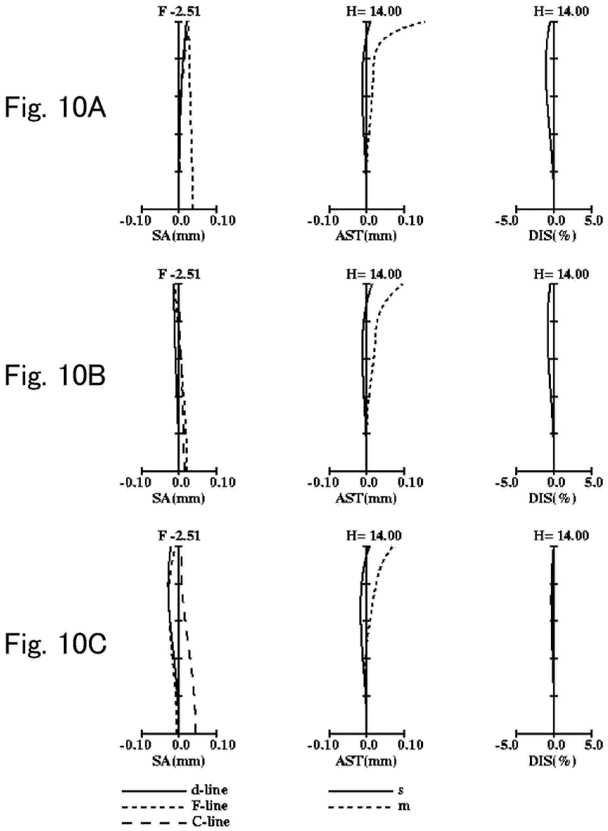

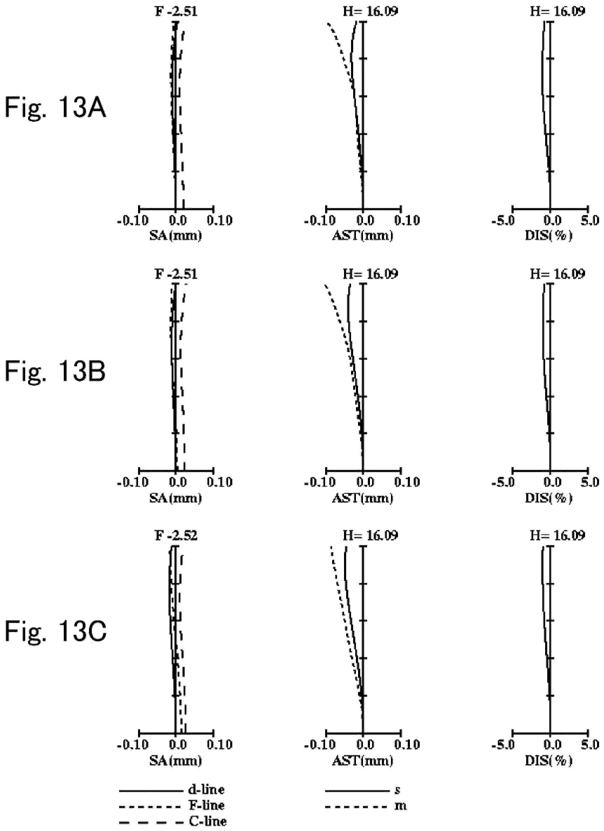

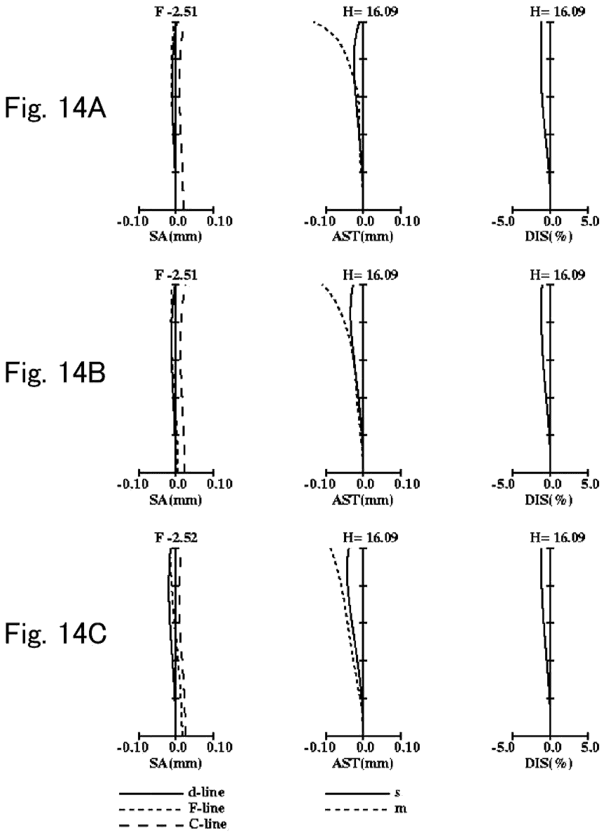

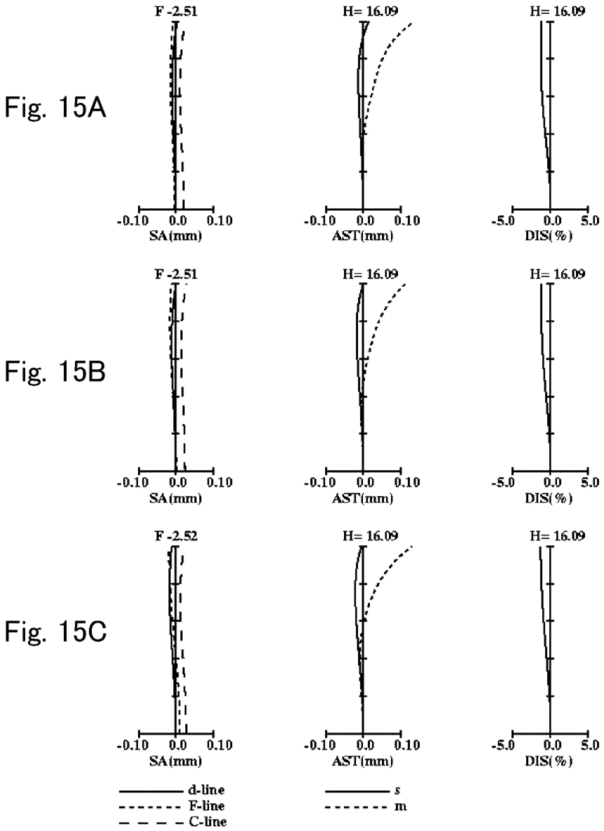

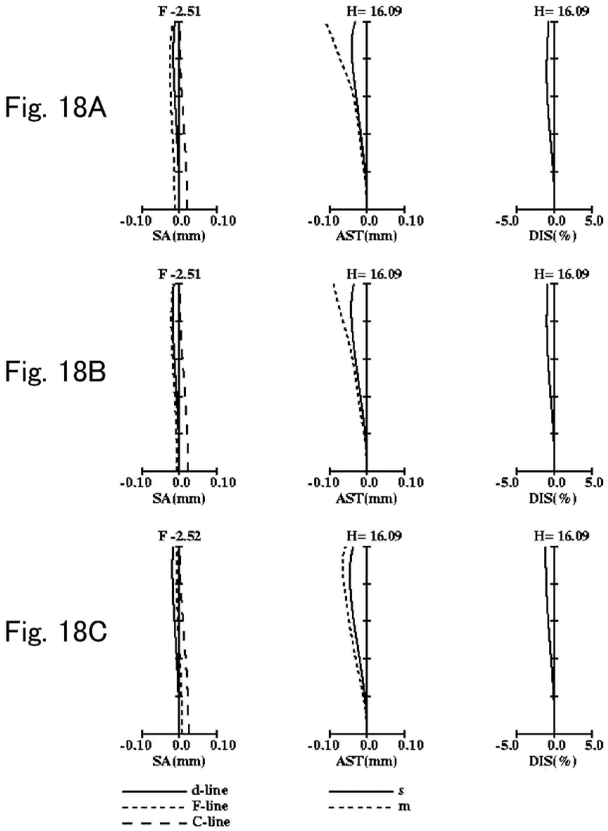

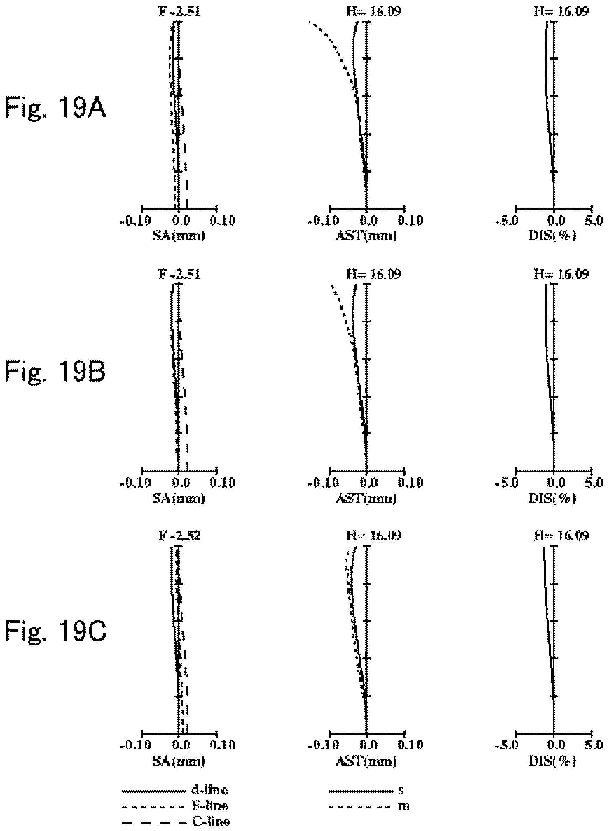

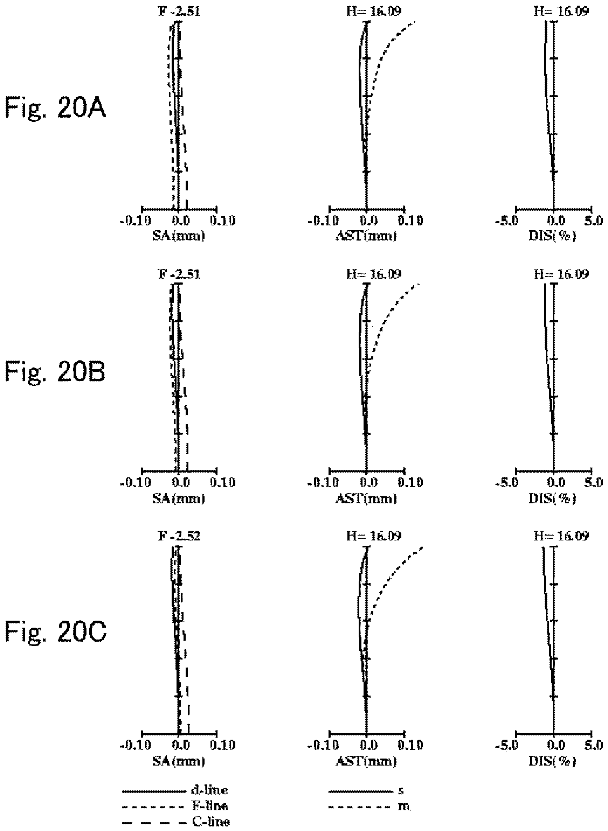

Hereinafter, a first embodiment of the present disclosure is described with reference to Figs. 1 to 20. Here, a zoom lens system is described as an example of the optical system.

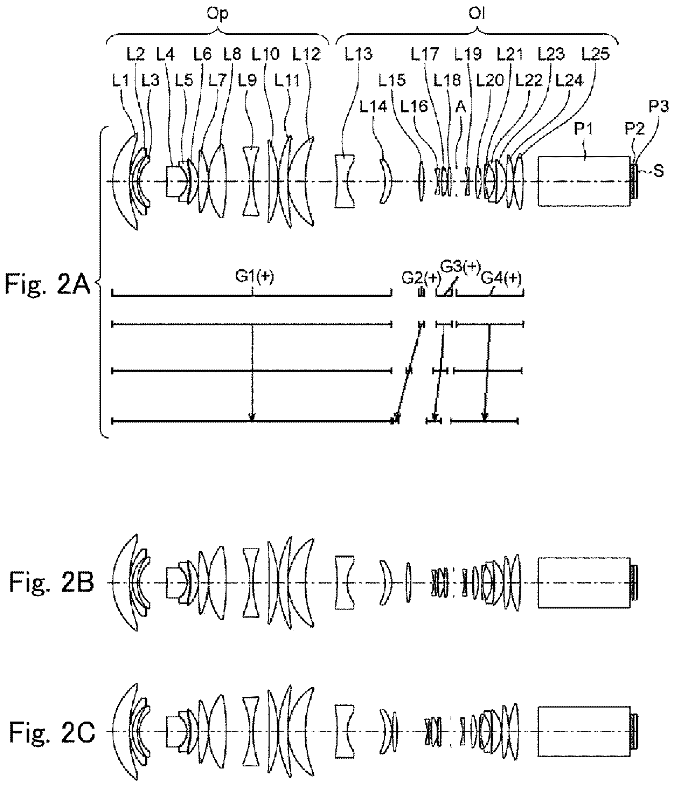

Figs. 1, 6, 11, and 16 are layout diagrams each showing an optical path at a wide-angle end in a zoom lens system according to any of Examples 1 to 4 for an object distance of 3000 mm. Figs. 2, 7, 12, and 17 are layout diagrams of the wide-angle end in the zoom lens systems according to Examples 1 to 4 for an object distance of 3000 mm. Figs. 2A, 7A, 12A, and 17A show lens layout diagrams at the wide-angle end in the zoom lens system. Figs. 2B, 7B, 12B, and 17B show lens layout diagrams at an intermediate position in the zoom lens system. Figs. 2C, 7C, 12C, and 17C show lens layout diagrams at a telephoto end in the zoom lens system.

The polygonal line arrows shown in lower part of each Figs. 2A, 7A, 12A, and 17A include straight lines obtained by connecting the positions of the first lens group G1 to the fourth lens group G4 corresponding to each of the states of the wide-angle end, the intermediate position, and the telephoto end ranked in order from the top in the drawings. The wide-angle end and the intermediate position, and the intermediate position and the telephoto end are simply connected by a straight line, which is different from the actual movement of each of the lens groups G1 to G4. The symbols (+) and (-) attached to the reference numerals of the respective lens groups G1 to G4 indicate the positive or negative power of each of the lens groups G1 to G4.

The wide-angle end is defined as the shortest focal length state in which the entire optical system has the shortest focal length fw. The intermediate position is defined as an intermediate focal length state between the wide-angle end and the telephoto end. The telephoto end is defined as the longest focal length state in which the entire optical system has the longest focal length ft. By using the focal length fw at the wide-angle end and the focal length ft at the telephoto end, the focal length fm at the intermediate position can be defined as fm = $\sqrt{(\text{fw} \times \text{ft})}$ ($\sqrt{}$: square root).

The zoom lens systems according to Examples 1 to 4 internally include an intermediate imaging position MI that is conjugate with both of a magnification conjugate point on the magnification side and a reduction conjugate point on the reduction side. A magnification optical system Op is arranged on the magnification side with respect to the intermediate imaging position MI, and a relay optical system OI is arranged on the reduction side with respect to the intermediate imaging position MI. Optical elements P1, P2 and P3 are arranged on the reduction side with respect to the relay optical system OI.

Regarding the zooming function, the zoom lens systems according to Examples 1 and 3 include a first lens group G1 to a fourth lens group G4 that are movable independently of one another. The first lens group G1 has a positive power, and is constituted of a first lens element L1 to a 14th lens element L14, including a surface 1 to a surface 28 (for surface numbers, see Numerical Examples described later). The second lens group G2 has a positive power, and is constituted of a 15th lens element L15, including a surface 29 to a surface 30. The third lens group G3 has a positive power, and is constituted of a 16th lens element L16 to a 18th lens element L18, including a surface 31 to a surface 36. The fourth lens group G4 has a positive power, and is constituted of a 19th lens element L19 to a 25th lens element L25, including a surface 38 to a surface 51. The optical elements P1, P2 and P3 include a surface 52 to a surface 57.

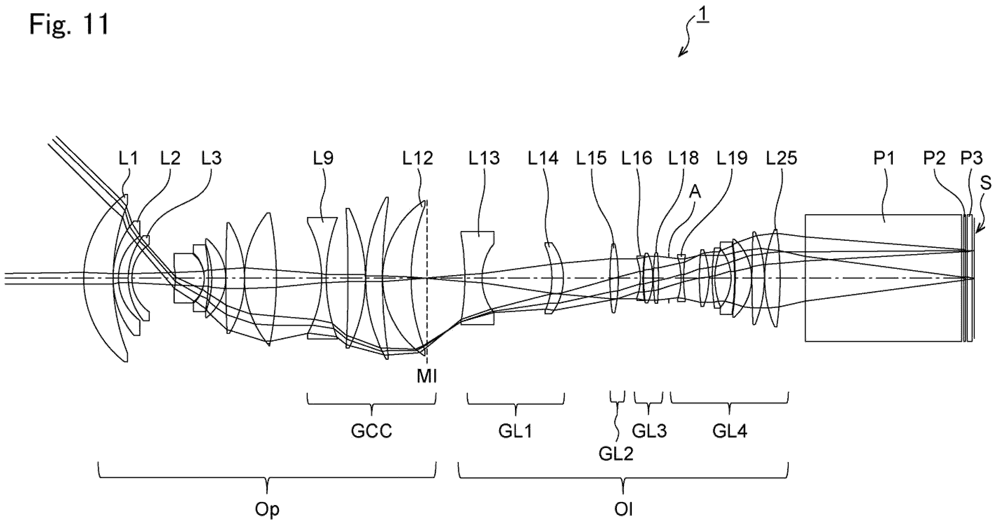

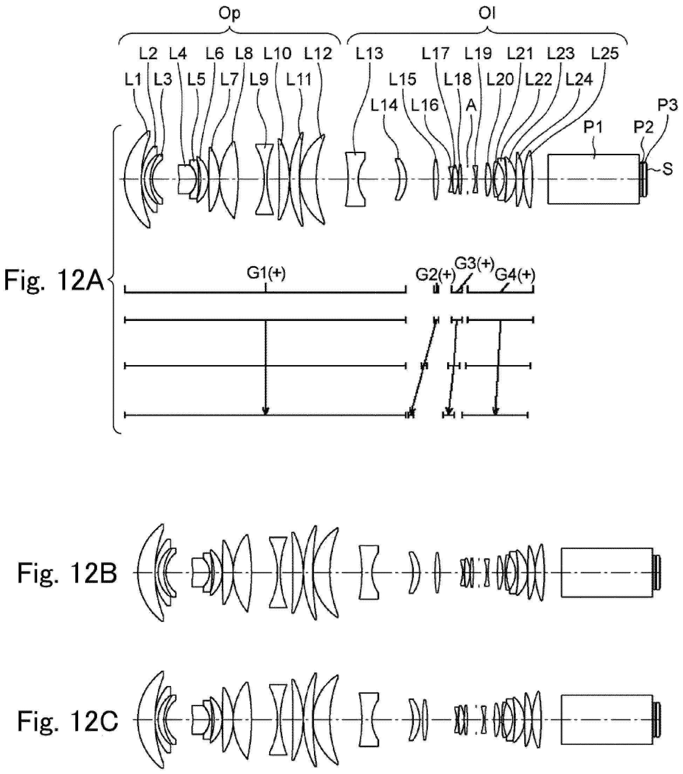

The first lens group G1 shown in Figs. 2 and 12 correspond to the magnification optical system Op and a first relay lens group GL1 shown in Figs. 1 and 11, respectively. The second to fourth lens groups G2 to G4 shown in Figs. 2 and 12 correspond to second to fourth relay lens groups GL2 to GL4 shown in Figs. 1 and 11, respectively. During zooming operation from the wide-angle end to the telephoto end, as shown in Figs. 2 and 12, the first lens group G1 remains stationary, while the second lens group G2, the third lens group G3 and the fourth lens group G4 are moving to the magnification side.

The zoom lens system according to Example 2 includes a first lens group G1 to a fourth lens group G4 that are movable independently of one another. The first lens group G1 has a positive power, and is constituted of a first lens element L1 to a 12nd lens element L12, including a surface 1 to a surface 24. The second lens group G2 has a positive power, and is constituted of a 13rd lens element L13, including a surface 25 to a surface 26. The third lens group G3 has a positive power, and is constituted of a 14th lens element L14 to a 16th lens element L16, including a surface 27 to a surface 32. The fourth lens group G4 has a positive power, and is constituted of a 17th lens element L17 to a 23rd lens element L23, including a surface 34 to a surface 47. The optical elements P1, P2 and P3 include a surface 48 to a surface 53.

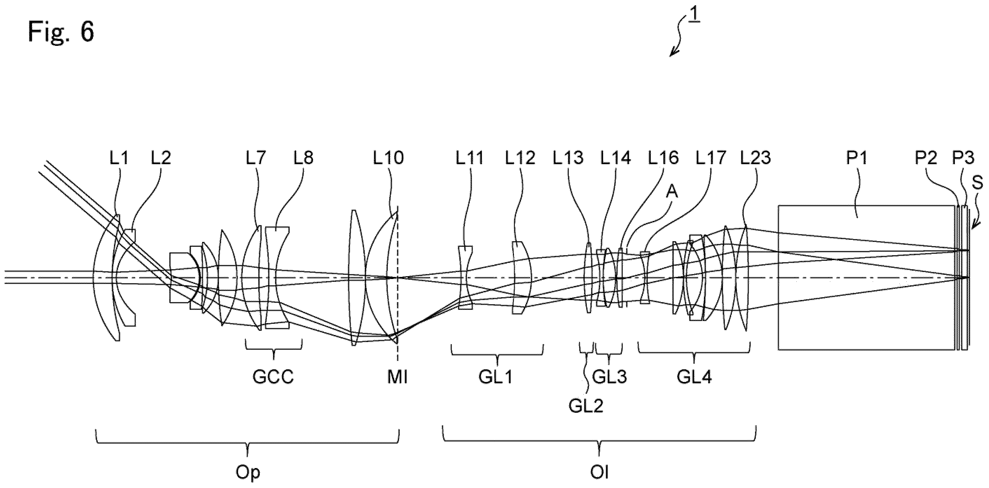

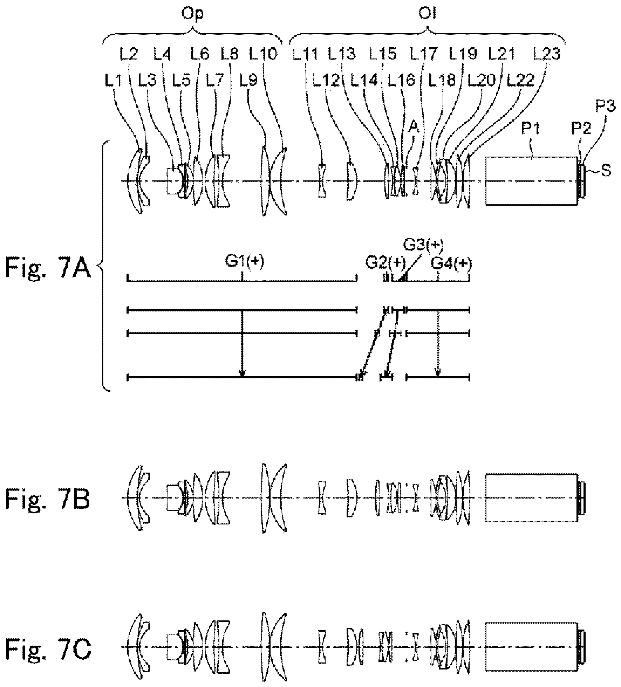

The first lens group G1 shown in Fig. 7 corresponds to the magnification optical system Op and a first relay lens group GL1 shown in Fig. 6. The second to fourth lens groups G2 to G4 shown in Fig. 7 corresponds to second to fourth relay lens groups GL2 to GL4 shown in Fig. 6, respectively. During zooming operation from the wide-angle end to the telephoto end, as shown in Fig. 7, the first lens group G1 and the fourth lens group G4 remain stationary, while the second lens group G2, the third lens group G3 are moving to the magnification side.

The zoom lens system according to Example 4 includes a first lens group G1 to a fourth lens group G4 that are movable independently of one another. The first lens group G1 has a positive power, and is constituted of a first lens element L1 to a 15th lens element L15, including a surface 1 to a surface 30. The second lens group G2 has a positive power, and is constituted of a 16th lens element L16, including a surface 31 to a surface 32. The third lens group G3 has a positive power, and is constituted of a 17th lens element L17 to a 19th lens element L19, including a surface 33 to a surface 38. The fourth lens group G4 has a positive power, and is constituted of a 20th lens element L20 to a 26th lens element L26, including a surface 40 to a surface 53. The optical elements P1, P2 and P3 include a surface 54 to a surface 59.

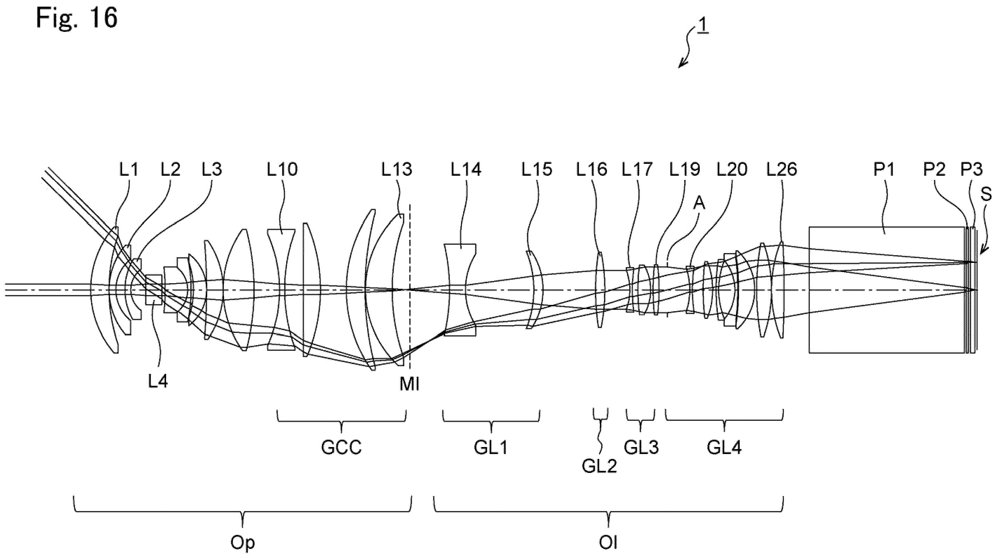

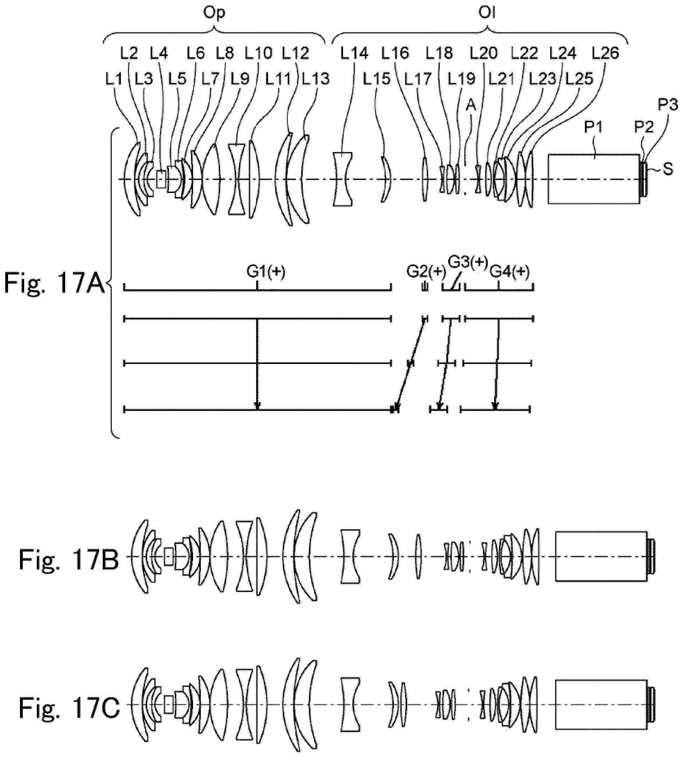

The first lens group G1 shown in Fig. 17 corresponds to the magnification optical system Op and a first relay lens group GL1 shown in Fig. 16. The second to fourth lens groups G2 to G4 shown in Fig. 17 corresponds to second to fourth relay lens groups GL2 to GL4 shown in Fig. 16, respectively. During zooming operation from the wide-angle end to the telephoto end, as shown in Fig. 17, the first lens group G1 remains stationary, while the second lens group G2, the third lens group G3 and the fourth lens group G4 are moving to the magnification side.

Regarding the focus function, the zoom lens systems according to Examples 1 to 4 may include, as necessary, a focus lens group that performs focus adjustment when an object distance is changed, and a field curvature correction lens group that corrects field curvature aberration after the focus lens group performs focus adjustment.

As an example, in the zoom lens systems according to Examples 1 and 3, the field curvature correction lens group GCC is constituted of the 9th lens element L9 to the 12th lens element L12, as shown in Figs. 1 and 11. In the zoom lens system according to Example 2, the field curvature correction lens group GCC is constituted of the 7th lens element L7 to the 8th lens element L8, as shown in Fig. 6. In the zoom lens system according to Example 4, the field curvature correction lens group GCC is constituted of the 10th lens element L10 to the 13th lens element L13, as shown in Fig. 16. During performing field curvature correction operation, the field curvature correction lens group GCC is moving along the optical axis of the magnification optical system Op, while the lens elements located on the magnification side of the field curvature correction lens group GCC remain stationary.

In each of the drawing, an imaging position on the magnification side (i.e., the magnification conjugate point) is positioned on the left side, and an imaging position on the reduction side (i.e., the reduction conjugate point) is positioned on the right side. In each of the drawing, a straight line drawn closest to the reduction side represents a position of the original image S, and the optical elements P1, P2 and P3 are positioned on the magnification side of the original image S. The optical elements P1, P2 and P3, which have zero optical power, represent different optical elements, such as a prism for color separation and a prism for color synthesis, an optical filter, a flat-parallel glass plate, a crystal low-pass filter, and an infrared cut filter.

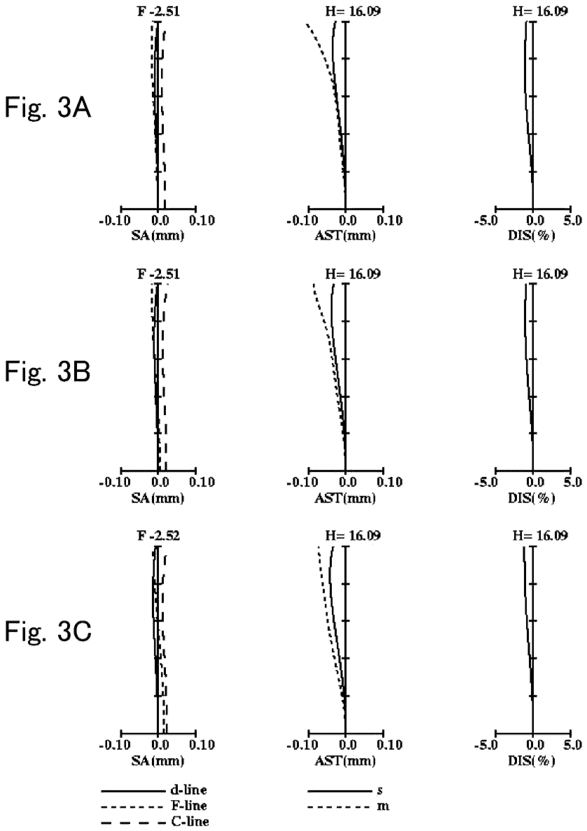

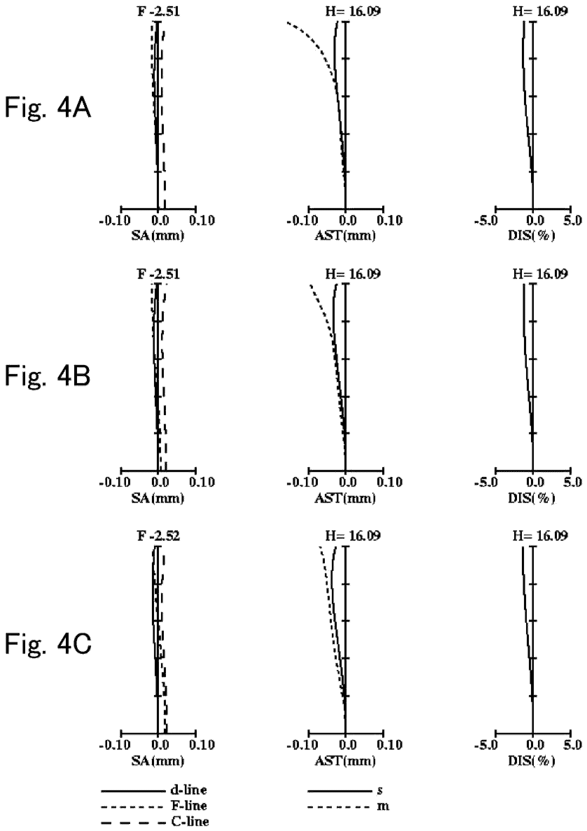

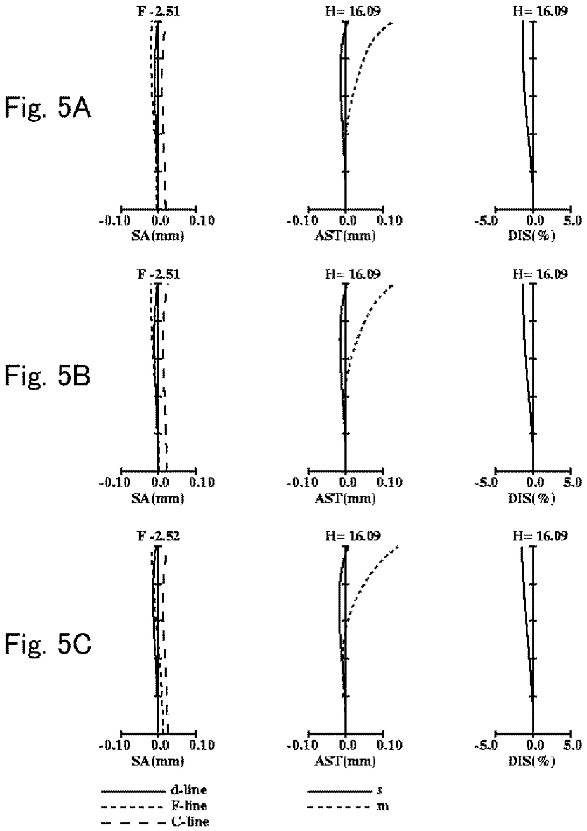

Figs. 3A-3C, 8A-8C, 13A-13C, and 18A-18C are longitudinal aberration diagrams of the zoom lens systems according to Examples 1 to 4 for an object distance of 3000 mm. Figs. 4A-4C, 9A-9C, 14A-14C, and 19A-19C are longitudinal aberration diagrams of the zoom lens systems according to Examples 1 to 4 for an object distance of 1800 mm. Figs. 5A-5C, 10A-10C, 15A-15C, and 20A-20C are longitudinal aberration diagrams of the zoom lens systems according to Examples 1 to 4 for an object distance of 20000 mm. In each drawing, Figs. 3A to 5A, 8A to 10A, 13A to 15A, and 18A to 20A show longitudinal aberration diagrams at the wide-angle end of the zoom lens system, Figs. 3B to 5B, 8B to 10B, 13B to 15B, and 18B to 20B show longitudinal aberration diagrams at the intermediate position, and Figs. 3C to 5C, 8C to 10C, 13C to 15C, and 18C to 20C show longitudinal aberration diagrams at the telephoto end.

Each of the longitudinal aberration diagrams shows spherical aberration (SA (mm)), astigmatism (AST (mm)), and distortion (DIS (%)) in order from the left side. In the spherical aberration diagram, the vertical axis represents a pupil height, the solid line represents the characteristic of the d-line, the short dashed line represents the characteristic of the F-line, and the long dashed line represents the characteristic of the C-line. In the astigmatism diagram, the vertical axis represents an image height, and the solid line represents the characteristic of the sagittal plane (denoted by s in the drawing), and the dashed line represents characteristic of the meridional plane (denoted by m in the drawing). In the distortion diagram, the vertical axis represents the image height. The distortion aberration represents a distortion with respect to equidistant projection.

(Example 1)

As shown in Figs. 1 and 2A-2C, the zoom lens system according to Example 1 includes the magnification optical system Op and the relay optical system OI. The magnification optical system Op is constituted of the first lens element L1 to the 12th lens element L12 in order from the magnification side to the reduction side. The first lens element L1 has a positive meniscus shape with the convex surfaces facing the magnification side. The second lens element L2 has a negative meniscus shape with the convex surfaces facing the magnification side. The third lens element L3 has a negative meniscus shape with the convex surfaces facing the magnification side. The fourth lens element L4 has a positive meniscus shape with the convex surfaces facing the reduction side. The fifth lens element L5 has a negative meniscus shape with the convex surfaces facing the reduction side. The sixth lens element L6 has a positive meniscus shape with the convex surfaces facing the reduction side. The seventh lens element L7 has a biconvex shape. The eighth lens element L8 has a biconvex shape. The ninth lens element L9 has a biconcave shape. The 10th lens element L10 has a positive meniscus shape with the convex surfaces facing the reduction side. The 11th lens element L11 has a positive meniscus shape with the convex surfaces facing the magnification side. The 12th lens element L12 has a positive meniscus shape with the convex surfaces facing the magnification side.

The relay optical system OI is constituted of the 13th lens element L13 to the 25th lens element L25 in order from the magnification side to the reduction side. The 13th lens element L13 has a biconcave shape. The 14th lens element L14 has a positive meniscus shape with the convex surfaces facing the reduction side. The 15th lens element L15 has a biconvex shape. The 16th lens element L16 has a biconcave shape. The 17th lens element L17 has a biconvex shape. The 18th lens element L18 has a biconvex shape. The 19th lens element L19 has a biconcave shape. The 20th lens element L20 has a biconvex shape. The 21st lens element L21 has a negative meniscus shape with the convex surfaces facing the magnification side. The 22nd lens element L22 has a negative meniscus shape with the convex surfaces facing the reduction side. The 23rd lens element L23 has a positive meniscus shape with the convex surfaces facing the reduction side. The 24th lens element L24 has a biconvex shape. The 25th lens element L25 has a biconvex shape.

The intermediate imaging position MI is positioned between the 12th lens element L12 and the 13th lens element L13. An aperture A is arranged between the 18th lens element L18 and the 19th lens element L19. The optical elements P1, P2 and P3 having zero optical power are arranged on the reduction side of the relay optical system OI.

(Example 2)

As shown in Figs. 6 and 7A-7C, the zoom lens system according to Example 2 includes the magnification optical system Op and the relay optical system OI. The magnification optical system Op is constituted of the first lens element L1 to the 10th lens element L10 in order from the magnification side to the reduction side. The first lens element L1 has a positive meniscus shape with the convex surfaces facing the magnification side. The second lens element L2 has a negative meniscus shape with the convex surfaces facing the magnification side. The third lens element L3 has a positive meniscus shape with the convex surfaces facing the reduction side. The fourth lens element L4 has a negative meniscus shape with the convex surfaces facing the reduction side. The fifth lens element L5 has a positive meniscus shape with the convex surfaces facing the reduction side. The sixth lens element L6 has a biconvex shape. The seventh lens element L7 has a positive meniscus shape with the convex surfaces facing the magnification side. The eighth lens element L8 has a biconcave shape. The ninth lens element L9 has a biconvex shape. The 10th lens element L10 has a positive meniscus shape with the convex surfaces facing the magnification side.

The relay optical system OI is constituted of the 11th lens element L11 to the 23rd lens element L23 in order from the magnification side to the reduction side. The 11th lens element L11 has a biconcave shape. The 12th lens element L12 has a positive meniscus shape with the convex surfaces facing the reduction side. The 13th lens element L13 has a biconvex shape. The 14th lens element L14 has a biconcave shape. The 15th lens element L15 has a biconvex shape. The 16th lens element L16 has a positive meniscus shape with the convex surfaces facing the magnification side. The 17th lens element L17 has a biconcave shape. The 18th lens element L18 has a positive meniscus shape with the convex surfaces facing the reduction side. The 19th lens element L19 has a negative meniscus shape with the convex surfaces facing the magnification side. The 20th lens element L20 has a negative meniscus shape with the convex surfaces facing the reduction side. The 21st lens element L21 has a positive meniscus shape with the convex surfaces facing the reduction side. The 22nd lens element L22 has a biconvex shape. The 23rd lens element L23 has a biconvex shape.

The intermediate imaging position MI is positioned between the 10th lens element L10 and the 11th lens element L11. An aperture A is arranged between the 16th lens element L16 and the 17th lens element L17. The optical elements P1, P2 and P3 having zero optical power are arranged on the reduction side of the relay optical system OI.

(Example 3)

As shown in Figs. 11 and 12A-12C, the zoom lens system according to Example 3 includes the magnification optical system Op and the relay optical system OI. The magnification optical system Op is constituted of the first lens element L1 to the 12th lens element L12 in order from the magnification side to the reduction side. The first lens element L1 has a positive meniscus shape with the convex surfaces facing the magnification side. The second lens element L2 has a negative meniscus shape with the convex surfaces facing the magnification side. The third lens element L3 has a negative meniscus shape with the convex surfaces facing the magnification side. The fourth lens element L4 has a positive meniscus shape with the convex surfaces facing the reduction side. The fifth lens element L5 has a negative meniscus shape with the convex surfaces facing the reduction side. The sixth lens element L6 has a positive meniscus shape with the convex surfaces facing the reduction side. The seventh lens element L7 has a biconvex shape. The eighth lens element L8 has a biconvex shape. The ninth lens element L9 has a biconvex shape. The 10th lens element L10 has a positive meniscus shape with the convex surfaces facing the reduction side. The 11th lens element L11 has a positive meniscus shape with the convex surfaces facing the magnification side. The 12th lens element L12 has a positive meniscus shape with the convex surfaces facing the magnification side.

The relay optical system OI is constituted of the 13th lens element L13 to the 25th lens element L25 in order from the magnification side to the reduction side. The 13th lens element L13 has a biconcave shape. The 14th lens element L14 has a positive meniscus shape with the convex surfaces facing the reduction side. The 15th lens element L15 has a biconvex shape. The 16th lens element L16 has a biconcave shape. The 17th lens element L17 has a biconvex shape. The 18th lens element L18 has a biconcave shape. The 19th lens element L19 has a biconcave shape. The 20th lens element L20 has a biconvex shape. The 21st lens element L21 has a negative meniscus shape with the convex surfaces facing the magnification side. The 22nd lens element L22 has a negative meniscus shape with the convex surfaces facing the reduction side. The 23rd lens element L23 has a positive meniscus shape with the convex surfaces facing the reduction side. The 24th lens element L24 has a biconvex shape. The 25th lens element L25 has a biconvex shape.

The intermediate imaging position MI is positioned between the 12th lens element L12 and the 13th lens element L13. An aperture A is arranged between the 18th lens element L18 and the 19th lens element L19. The optical elements P1, P2 and P3 having zero optical power are arranged on the reduction side of the relay optical system OI.

(Example 4)

As shown in Figs. 16 and 17A-17C, the zoom lens system according to Example 4 includes the magnification optical system Op and the relay optical system OI. The magnification optical system Op is constituted of the first lens element L1 to the 13rd lens element L13 in order from the magnification side to the reduction side. The first lens element L1 has a positive meniscus shape with the convex surfaces facing the magnification side. The second lens element L2 has a negative meniscus shape with the convex surfaces facing the magnification side. The third lens element L3 has a negative meniscus shape with the convex surfaces facing the magnification side. The fourth lens element L4 is constituted of a zero-power element having a refractive index greater than 1, e.g., a shape of flat plate with the both side being flat. The fifth lens element L5 has a positive meniscus shape with the convex surfaces facing the reduction side. The sixth lens element L6 has a negative meniscus shape with the convex surfaces facing the reduction side. The seventh lens element L7 has a positive meniscus shape with the convex surfaces facing the reduction side. The eighth lens element L8 has a positive meniscus shape with the convex surfaces facing the reduction side. The ninth lens element L9 has a biconvex shape. The tenth lens element L10 has a biconvex shape. The 11th lens element L11 has a biconvex shape. The 12th lens element L12 has a positive meniscus shape with the convex surfaces facing the reduction side. The 13th lens element L13 has a positive meniscus shape with the convex surfaces facing the magnification side.

The relay optical system OI is constituted of the 14th lens element L14 to the 26th lens element L26 in order from the magnification side to the reduction side. The 14th lens element L14 has a biconcave shape. The 15th lens element L15 has a positive meniscus shape with the convex surfaces facing the reduction side. The 16th lens element L16 has a biconvex shape. The 17th lens element L17 has a biconcave shape. The 18th lens element L18 has a biconvex shape. The 19th lens element L19 has a biconvex shape. The 20th lens element L20 has a biconcave shape. The 21st lens element L21 has a biconvex shape. The 22nd lens element L22 has a negative meniscus shape with the convex surfaces facing the magnification side. The 23rd lens element L23 has a negative meniscus shape with the convex surfaces facing the reduction side. The 24th lens element L24 has a positive meniscus shape with the convex surfaces facing the reduction side. The 25th lens element L25 has a biconvex shape. The 26th lens element L26 has a biconvex shape.

The intermediate imaging position MI is positioned between the 13th lens element L13 and the 14th lens element L14. An aperture A is arranged between the 19th lens element L19 and the 20th lens element L20. The optical elements P1, P2 and P3 having zero optical power are arranged on the reduction side of the relay optical system OI.

Next, conditions which the zoom lens system according to each of Examples 1 to 5 can satisfy are described below. Although a plurality of the conditions are defined for the zoom lens system according to each of the examples, all of these plurality of conditions may be satisfied, or the individual conditions may be satisfied to obtain the corresponding effects.

The zoom lens system according to each of Examples 1 to 4 is an optical system internally having an intermediate imaging position MI that is conjugate with each of a magnification conjugate point on a magnification side and a reduction conjugate point on a reduction side. The optical system includes:

   a magnification optical system Op including a plurality of lens elements and positioned on the magnification side with respect to the intermediate imaging position MI; and
   a relay optical system OI including a plurality of lens elements and positioned on the reduction side with respect to the intermediate imaging position MI.

A first lens element L1 positioned closest to the magnification side of the magnification optical system Op has a positive power.

The optical system satisfies the following condition (1):

$$0.9 \leq f1/f2 \leq 1.5 \quad \cdots (1)$$

where f1 is a focal length of the magnification optical system Op, and f2 is a focal length of the relay optical system OI.

According to such a configuration, it is easy to manufacture wide-angle lenses and reduce the distortion aberration. Therefore, even if any aspherical lenses are not used, the distortion aberration can be suppressed to a sufficient level. In addition, the back focus can be longer to increase the interval between the relay optical system and the reduction conjugate point, so that a larger optical element, such as a color separation prism or a color synthesis prism for three colors of RGB, can be arranged in the interval. If falling below the lower limit of the condition (1), it is more difficult to correct the distortion aberration. If exceeding the upper limit, the outer diameter of the lens is increasing.

In addition, the zoom lens system according to each of Examples 1 to 4 may satisfy the following condition (2):

$$2.0 < (L1R2+L1R1)/(L1R2-L1R1) < 5.0 \quad \cdots(2)$$

where L1R1 is a radius of curvature of the surface on the magnification side of the first lens element L1, and L1R2 is a radius of curvature of the surface on the reduction side of the first lens element L1.

The condition (2) relates to the shape factor of the lens. When the condition (2) is satisfied, it is easier to reduce distortion aberration while keeping the outer diameter of the first lens element at an appropriate size. If falling below the lower limit of the condition (2), the outer diameter of the lens is increasing. If exceeding the upper limit, it is more difficult to correct the distortion aberration.

In the zoom lens system according to each of Examples 1 to 4, the first lens element L1 may have a refractive index of 1.8 or more.

According to such a configuration, the optical power of the first lens element is increasing, so that the outer diameter of the first lens element can be reduced.

In the zoom lens system according to each of Examples 1 to 4, the magnification optical system Op may include a second lens element L2 having a negative power and a third lens element L3 having a negative power in order from the magnification side to the reduction side, following the first lens element L1 having a positive power.

According to such a configuration, by adopting a positive, negative, negative (PNN) lens arrangement, it is easy to manufacture wide-angle lenses and reduce the distortion aberration.

Further, in the zoom lens system according to each of Examples 1 to 4, only the first lens element L1, the second lens element L2, and the third lens element L3 may be arranged as optical elements having a power in a range from the surface on the magnification side of the first lens element L1 to a position where a most off-axis light ray intersects an optical axis of the magnification optical system.

According to such a configuration, the outer diameter of the first lens element can be reduced. In addition, the total length of the optical system can be shortened. Note that an optical element having zero optical power may be arranged within the above-described range.

In addition, in the zoom lens system according to each of Examples 1 to 4, surface shapes of the plurality of lens elements constituting the magnification optical system Op and the plurality of lens elements constituting the relay optical system OI may be spherical or planar.

According to such a configuration, cost for manufacturing the optical system can be reduced as compared with the case of adopting any aspherical lens.

Furthermore, the zoom lens system according to each of Examples 1 to 4 may satisfy the following condition (3):

$$5 < |L1f/fw| < 10 \quad \cdots(3)$$

where L1f is a focal length of the first lens element L1, and fw is a focal length at a wide-angle end of the optical system in total.

When the condition (3) is satisfied, the relationship between the focal length L1f of the first lens element and the focal length fw at the wide-angle end of the optical system in total can be optimized. If falling below the lower limit of the condition (3), the outer diameter of the first lens element becomes larger, so that it is more difficult to manufacture the first lens element. If exceeding the upper limit, it is more difficult to correct the distortion aberration.

Further, in the zoom lens system according to each of Examples 1 to 4, the magnification optical system Op may include a field curvature correction lens group having a positive power adjacent to the magnification side of the intermediate imaging position MI, wherein during performing field curvature correction operation, the field curvature correction lens group may move along the optical axis of the magnification optical system Op, while both of a lens element positioned on the magnification side with respect to the field curvature correction lens group and the relay optical system may remain stationary.

According to such a configuration, during performing field curvature correction operation, movement of the field curvature correction lens group adjacent to the magnification side from the intermediate imaging position allows a change in back focus to be further reduced as compared with the case where the lens element positioned on the magnification side of the magnification optical system is moved.

In the zoom lens system of each of Examples 1 to 4, in the field curvature correction lens group, the lens element positioned closest to the magnification side may have a negative power, and the lens element positioned closest to the reduction side may have a positive power.

According to such a configuration, during performing field curvature correction operation, a change in chromatic aberration of magnification caused by the movement of the field curvature correction lens group can be reduced.

Furthermore, the zoom lens system according to each of Examples 1 to 4 may satisfy the following condition (4):

$$-5 < vdm-vds < 5 \quad \cdots(4)$$

where vdm is an Abbe number of the lens element positioned closest to the magnification side of the field curvature correction lens group, and vds is an Abbe number of the lens element positioned closest to the reduction side of the field curvature correction lens group.

When the condition (4) is satisfied, a change in chromatic aberration of magnification caused by the movement of the field curvature correction lens group can be reduced. If falling below the lower limit (4) of the condition, during performing field curvature correction operation, the change in chromatic aberration of magnification is increased. If exceeding the upper limit, off-axis chromatic aberration of magnification is degraded.

Further, in the zoom lens system according to each of Examples 1 to 4, the relay optical system OI may include, in order from the magnification side to the reduction side, a first relay lens group GL1 having a negative power, a second relay lens group GL2 having a positive power, a third relay lens group GL3 having a positive power, and a fourth relay lens group GL4 having a positive power, and

wherein, during performing zooming operation from the wide-angle end to the telephoto end, the magnification optical system Op and the first relay lens group GL1 may remain stationary, and the second relay lens group GL2, the third relay lens group GL3, and the fourth relay lens group GL4 may be moving to the magnification side.

According to such a configuration, by positioning the lens group moving during zooming operation within the relay optical system, it is possible to suppress variation in field curvature caused by the zooming operation. In addition, the total length of the optical system can be reduced, so that the zoom mechanism can be downsized and simplified.

In the zoom lens system according to Example 4, a zero-power element L4 having a refractive index larger than 1 may be positioned on the reduction side of the third lens element L3.

According to such a configuration, the outer diameter of the first lens element can be reduced.

The zoom lens system according to Example 4 may satisfy the following condition (5):

$$|tfp/fw| < 1.1 \quad \cdots(5)$$

where tfp is a thickness of the zero-power element L4, and fw is a focal length at the wide-angle end of the optical system in total.

When the condition (5) is satisfied, the relationship between the thickness tfp of the zero-power element and the focal length fw at the wide-angle end of the optical system in total can be optimized. If exceeding the upper limit of the condition (5), the total length of the optical system is increased.

(Numerical Example 1)

Regarding the zoom lens system of Numerical Example 1 (corresponding to Example 1), Table 1 shows surface data, Table 2 shows various data, Table 3 shows single lens data, Table 4 shows zoom lens group data, and Table 5 shows zoom lens group magnification ratios, and Table 6 shows focus data (unit: mm).

[Table 1]

| Surface data | | | | |
|---|---|---|---|---|
| SURFACE NUMBER | r | d | nd | vd |
| Object plane | ∞ (infinity) | 3000.00000 | | |
| 1 | 62.05490 | 17.04020 | 1.84666 | 23.8 |
| 2 | 115.01750 | 0.20000 | | |
| 3 | 50.81900 | 3.00000 | 1.80420 | 46.5 |
| 4 | 31.65260 | 5.42970 | | |
| 5 | 41.41820 | 2.00000 | 1.72916 | 54.7 |

(continued)

| Surface data | | | | |
|---|---|---|---|---|
| SURFACE NUMBER | r | d | nd | vd |
| 6 | 25.42100 | 26.66680 | | |
| 7 | -30.68940 | 19.32240 | 1.61800 | 63.4 |
| 8 | -18.57590 | 0.20000 | | |
| 9 | -19.38010 | 2.00000 | 1.86966 | 20.0 |
| 10 | -136.47320 | 1.68180 | | |
| 11 | -65.73530 | 7.69270 | 1.80420 | 46.5 |
| 12 | -31.16700 | 0.20000 | | |
| 13 | 390.00350 | 9.89970 | 1.72916 | 54.7 |
| 14 | -74.93560 | 0.20000 | | |
| 15 | 62.93810 | 17.46120 | 1.49700 | 81.6 |
| 16 | -198.02760 | 22.97220 | | |
| 17 | -79.34740 | 3.00000 | 1.84666 | 23.8 |
| 18 | 98.31520 | 16.30700 | | |
| 19 | -679.52110 | 9.42390 | 1.92286 | 20.9 |
| 20 | -102.43930 | 0.20000 | | |
| 21 | 99.13480 | 9.64140 | 1.92286 | 20.9 |
| 22 | 289.45060 | 0.20000 | | |
| 23 | 53.80300 | 16.72100 | 1.92286 | 20.9 |
| 24 | 114.66000 | 30.92120 | | |
| 25 | -147.28880 | 10.00000 | 1.51680 | 64.2 |
| 26 | 32.98970 | 36.97620 | | |
| 27 | -46.88450 | 6.82160 | 1.61800 | 63.4 |
| 28 | -35.66700 | variable | | |
| 29 | 152.27280 | 4.85060 | 1.49700 | 81.6 |
| 30 | -102.04540 | variable | | |
| 31 | -32.25170 | 1.50000 | 1.62299 | 58.1 |
| 32 | 98.93610 | 2.86040 | | |
| 33 | 117.84270 | 6.17420 | 1.43700 | 95.1 |
| 34 | -28.87750 | 0.20000 | | |
| 35 | 125.13180 | 3.46310 | 1.59410 | 60.5 |
| 36 | -125.13180 | variable | | |
| 37 (Aperture) | ∞ | 10.74440 | | |
| 38 | -39.31200 | 1.50000 | 1.67300 | 38.3 |
| 39 | 84.28500 | 7.32120 | | |
| 40 | 130.27520 | 5.53420 | 1.68960 | 31.1 |
| 41 | -45.50730 | 2.00000 | | |
| 42 | 118.88820 | 1.50000 | 1.51680 | 64.2 |
| 43 | 44.71790 | 9.40950 | | |

(continued)

| Surface data | | | | |
|---|---|---|---|---|
| SURFACE NUMBER | r | d | nd | vd |
| 44 | -26.58870 | 2.00000 | 1.67300 | 38.3 |
| 45 | -146.54650 | 0.47300 | | |
| 46 | -141.65470 | 9.44030 | 1.49700 | 81.6 |
| 47 | -30.50000 | 0.20000 | | |
| 48 | 268.31880 | 7.22640 | 1.49700 | 81.6 |
| 49 | -82.59440 | 0.20000 | | |
| 50 | 72.47320 | 8.92980 | 1.49700 | 81.6 |
| 51 | -209.67300 | variable | | |
| 52 | ∞ | 91.00000 | 1.51680 | 64.2 |
| 53 | ∞ | 1.00000 | | |
| 54 | ∞ | 1.10000 | 1.50997 | 62.2 |
| 55 | ∞ | 1.00000 | | |
| 56 | ∞ | 3.00000 | 1.50847 | 61.2 |
| 57 | ∞ | BF | | |
| Image plane | ∞ | | | |

[Table 2]

| Various data | | | |
|---|---|---|---|
| Zoom ratio | 1.19932 | | |
| | WIDE-ANGLE | INTERMEDIATE | TELEPHOTO |
| Focal length | -16.3799 | -17.8692 | -19.6448 |
| F number | -2.50594 | -2.51401 | -2.52350 |
| Angle of view | -44.7429 | -42.2701 | -39.6463 |
| Image height | 16.0900 | 16.0900 | 16.0900 |
| Total length of lens | 520.0192 | 520.0213 | 520.0186 |
| BF | 1.01912 | 1.02224 | 1.01950 |
| d28 | 27.6660 | 15.1640 | 2.0000 |
| d30 | 12.8030 | 21.6240 | 28.4760 |
| d36 | 4.6530 | 5.9670 | 9.5240 |
| d51 | 15.0720 | 17.4380 | 20.1930 |
| Position of entrance pupil | 45.1368 | 45.4001 | 45.8054 |
| Position of exit pupil | -817.1265 | -819.4925 | -822.2475 |
| Position of front principal point | 28.4289 | 27.1417 | 25.6918 |
| Position of rear principal point | 536.3110 | 537.7856 | 539.5367 |

[Table 3]

| Single lens data | | |
| --- | --- | --- |
| Lens element | First surface | Focal length |
| 1 | 1 | 138.7082 |
| 2 | 3 | -112.1866 |
| 3 | 5 | -95.2881 |
| 4 | 7 | 47.3212 |
| 5 | 9 | -26.1809 |
| 6 | 11 | 67.0469 |
| 7 | 13 | 86.9871 |
| 8 | 15 | 98.2784 |
| 9 | 17 | -51.4632 |
| 10 | 19 | 129.6898 |
| 11 | 21 | 159.4986 |
| 12 | 23 | 97.0457 |
| 13 | 25 | -51.1861 |
| 14 | 27 | 195.7518 |
| 15 | 29 | 123.7209 |
| 16 | 31 | -38.8712 |
| 17 | 33 | 53.7630 |
| 18 | 35 | 105.8578 |
| 19 | 38 | -39.6403 |
| 20 | 40 | 49.5436 |
| 21 | 42 | -139.6600 |
| 22 | 44 | -48.5905 |
| 23 | 46 | 76.0629 |
| 24 | 48 | 127.9462 |
| 25 | 50 | 109.5164 |

[Table 4]

| Zoom lens group data | | | | | |
| --- | --- | --- | --- | --- | --- |
| Gr. | 1st. surf. | Focal length | Length of lens group | Position of front principal point | Position of rear principal point |
| 1 | 1 | 37.69667 | 276.17900 | 91.58609 | 138.73759 |
| 2 | 29 | 123.72090 | 4.85060 | 1.95244 | 3.54217 |
| 3 | 31 | 133.62265 | 14.19770 | 29.00385 | 38.41808 |
| 4 | 37 | 66.08968 | 66.47880 | 60.93129 | 109.79303 |

[Table 5]

| Zoom lens group magnification ratio | | | | |
| --- | --- | --- | --- | --- |
| Gr. | 1st. surf. | WIDE-ANGLE | INTERMEDIATE | TELEPHOTO |
| 1 | 1 | -0.01234 | -0.01234 | -0.01234 |

(continued)

| Zoom lens group magnification ratio | | | | |
|---|---|---|---|---|
| Gr. | 1st. surf. | WIDE-ANGLE | INTERMEDIATE | TELEPHOTO |
| 2 | 29 | -23.89837 | 16.89013 | 6.03839 |
| 3 | 31 | 0.04214 | -0.07092 | -0.24361 |
| 4 | 37 | 0.43276 | 0.39691 | 0.35527 |

[Table 6]

| Focus data | | | | |
|---|---|---|---|---|
| Object distance: 1800mm | | | | |
| Surface | WIDE-ANGLE | INTERMEDIATE | TELEPHOTO | |
| 16 | 22.842 | 22.802 | 22.762 | |
| 24 | 30.796 | 30.796 | 30.796 | |
| 51 | 15.128 | 17.503 | 20.264 | |
| Object distance: 20000mm | | | | |
| Surface | WIDE-ANGLE | INTERMEDIATE | TELEPHOTO | |
| 16 | 22.842 | 22.802 | 22.762 | |
| 24 | 31.051 | 31.091 | 31.131 | |
| 51 | 15.005 | 17.358 | 20.086 | |

(Numerical Example 2)

Regarding the zoom lens system of Numerical Example 2 (corresponding to Example 2), Table 7 shows surface data, Table 8 shows various data, Table 9 shows single lens data, Table 10 shows zoom lens group data, and Table 11 shows zoom lens group magnification ratios, and Table 12 shows focus data (unit: mm).

[Table 7]

| Surface data | | | | |
|---|---|---|---|---|
| SURFACE NUMBER | r | d | nd | vd |
| Object plane | ∞ (infinity) | | | |
| 1 | 49.16200 | 9.82790 | 1.84666 | 23.8 |
| 2 | 107.50440 | 0.20000 | | |
| 3 | 50.16880 | 2.00000 | 1.87071 | 40.7 |
| 4 | 22.09230 | 28.31770 | | |
| 5 | -22.41420 | 14.00000 | 1.80420 | 46.5 |
| 6 | -17.46890 | 0.76970 | | |
| 7 | -17.04870 | 1.50000 | 1.86966 | 20.0 |
| 8 | -153.43810 | 2.11140 | | |
| 9 | -48.03790 | 5.58280 | 1.77250 | 49.6 |
| 10 | -24.94950 | 0.20000 | | |
| 11 | 202.46930 | 9.15970 | 1.72916 | 54.7 |
| 12 | -44.40830 | 2.61730 | | |
| 13 | 42.70370 | 8.85810 | 1.72916 | 54.7 |

(continued)

| Surface data | | | | |
|---|---|---|---|---|
| SURFACE NUMBER | r | d | nd | vd |
| 14 | 266.07330 | 4.86250 | | |
| 15 | -204.91260 | 4.00000 | 1.84666 | 23.8 |
| 16 | 44.77810 | 37.27000 | | |
| 17 | 306.01040 | 8.51720 | 1.92286 | 20.9 |
| 18 | -119.67260 | 0.20000 | | |
| 19 | 43.29950 | 10.69680 | 1.92286 | 20.9 |
| 20 | 88.96160 | 38.13130 | | |
| 21 | -108.92000 | 3.00000 | 1.72916 | 54.7 |
| 22 | 31.81910 | 24.97850 | | |
| 23 | -102.57710 | 8.54350 | 1.68960 | 31.1 |
| 24 | -34.87150 | variable | | |
| 25 | 106.67990 | 4.11870 | 1.49700 | 81.6 |
| 26 | -154.26650 | variable | | |
| 27 | -46.76910 | 1.50000 | 1.73800 | 32.3 |
| 28 | 79.19630 | 0.20000 | | |
| 29 | 77.29610 | 6. 60810 | 1.49700 | 81.6 |
| 30 | -31.89220 | 0.20000 | | |
| 31 | 83.06920 | 2.97980 | 1.77250 | 49.6 |
| 32 | 512.09670 | variable | | |
| 33 (Aperture) | ∞ | 9.20870 | | |
| 34 | -35.95210 | 1.50000 | 1.67300 | 38.3 |
| 35 | 97.50750 | 13.38210 | | |
| 36 | -511.83560 | 4.83630 | 1.86966 | 20.0 |
| 37 | -43.53840 | 0.20000 | | |
| 38 | 82.13070 | 1.50000 | 1.73800 | 32.3 |
| 39 | 46.82440 | 8.31580 | | |
| 40 | -26.94580 | 1.50000 | 1.73800 | 32.3 |
| 41 | -139.62320 | 0.20000 | | |
| 42 | -267.56370 | 8.59110 | 1.49700 | 81.6 |
| 43 | -30.64370 | 0.20000 | | |
| 44 | 310.47230 | 6.46460 | 1.49700 | 81.6 |
| 45 | -70.53440 | 0.20000 | | |
| 46 | 75.69160 | 6.51020 | 1.49700 | 81.6 |
| 47 | -301.55860 | 15.16900 | | |
| 48 | ∞ | 91.00000 | 1.51680 | 64.2 |
| 49 | ∞ | 1.00000 | | |
| 50 | ∞ | 1.10000 | 1.50997 | 62.2 |
| 51 | ∞ | 1.00000 | | |

(continued)

| Surface data | | | | |
|---|---|---|---|---|
| SURFACE NUMBER | r | d | nd | vd |
| 52 | ∞ | 3.00000 | 1.50847 | 61.2 |
| 53 | ∞ | BF | | |
| Image plane | ∞ | | | |

[Table 8]

| Various data | | | |
|---|---|---|---|
| Zoom ratio | 1.29065 | | |
| | WIDE-ANGLE | INTERMEDIATE | TELEPHOTO |
| Focal length | -16.3138 | -17.7534 | -21.0553 |
| F number | -2.50813 | -2.50822 | -2.50924 |
| Angle of view | -40.7721 | -38.3786 | -33.6187 |
| Image height | 14.0000 | 14.0000 | 14.0000 |
| Total length of lens | 449.9937 | 450.0101 | 450.0247 |
| BF | 0.99295 | 1.01026 | 1.02393 |
| d24 | 27.1970 | 18.5240 | 2.0000 |
| d26 | 3.8200 | 9.2130 | 17.1030 |
| d32 | 2.1550 | 5.4340 | 14.0690 |
| Position of entrance pupil | 30.8516 | 31.0199 | 31.7157 |
| Position of exit pupil | -890.4241 | -890.4241 | -890.4241 |
| Position of front principal point | 14.2392 | 12.9129 | 10.1630 |
| Position of rear principal point | 466.2197 | 467.6595 | 470.9338 |

[Table 9]

| Single lens data | | |
|---|---|---|
| Lens element | First surface | Focal length |
| 1 | 1 | 99.3233 |
| 2 | 3 | -46.8926 |
| 3 | 5 | 43.5277 |
| 4 | 7 | -22.1677 |
| 5 | 9 | 60.7912 |
| 6 | 11 | 50.7419 |
| 7 | 13 | 68. 6147 |
| 8 | 15 | -43.0866 |
| 9 | 17 | 94.1238 |
| 10 | 19 | 82.1714 |
| 11 | 21 | -33.4712 |
| 12 | 23 | 72.8601 |
| 13 | 25 | 127.5640 |
| 14 | 27 | -39.6429 |

(continued)

| Single lens data | | |
| --- | --- | --- |
| Lens element | First surface | Focal length |
| 15 | 29 | 46.3580 |
| 16 | 31 | 127.9663 |
| 17 | 34 | -38.8542 |
| 18 | 36 | 54.4564 |
| 19 | 38 | -150.3057 |
| 20 | 40 | -45.5006 |
| 21 | 42 | 68.8039 |
| 22 | 44 | 116.3023 |
| 23 | 46 | 122.4416 |

[Table 10]

| Zoom lens group data | | | | | |
| --- | --- | --- | --- | --- | --- |
| Gr. | 1st. surf. | Focal length | Length of lens group | Position of front principal point | Position of rear principal point |
| 1 | 1 | 49.95910 | 225.34440 | 93.57236 | 23.67868 |
| 2 | 25 | 127.56404 | 4.11870 | 1.13071 | 2.48361 |
| 3 | 27 | 141.10197 | 11.48790 | 17.81166 | 23.72625 |
| 4 | 33 | 63.28625 | 174.87780 | 58.95540 | 145.96304 |

[Table 11]

| Zoom lens group magnification ratio | | | | |
| --- | --- | --- | --- | --- |
| Gr. | 1st. surf. | WIDE-ANGLE | INTERMEDIATE | TELEPHOTO |
| 1 | 1 | -0.01641 | -0.01641 | -0.01641 |
| 2 | 25 | -2.46977 | -2.96818 | -4.82225 |
| 3 | 27 | 0.25176 | 0.22808 | 0.16654 |
| 4 | 33 | 0.52742 | 0.52715 | 0.52693 |

[Table 12]

| Focus data | | | |
| --- | --- | --- | --- |
| Object distance: 1800mm | | | |
| Surface | WIDE-ANGLE | INTERMEDIATE | TELEPHOTO |
| 12 | 1.897 | 1.897 | 2.017 |
| 16 | 37.990 | 37.990 | 37.870 |
| 47 | 15.254 | 15.259 | 15.280 |
| Object distance: 20000mm | | | |
| Surface | WIDE-ANGLE | INTERMEDIATE | TELEPHOTO |
| 12 | 3.337 | 3.417 | 3.517 |
| 16 | 36.550 | 36.470 | 36.370 |

(continued)

| Object distance: 20000mm | | | |
|---|---|---|---|
| Surface | WIDE-ANGLE | INTERMEDIATE | TELEPHOTO |
| 47 | 15.088 | 15.049 | 15.000 |

(Numerical Example 3)

Regarding the zoom lens system of Numerical Example 3 (corresponding to Example 3), Table 13 shows surface data, Table 14 shows various data, Table 15 shows single lens data, Table 16 shows zoom lens group data, and Table 17 shows zoom lens group magnification ratios, and Table 18 shows focus data (unit: mm).

[Table 13]

| Surface data | | | | |
|---|---|---|---|---|
| SURFACE NUMBER | r | d | nd | vd |
| Object plane | ∞ (infinity) | | | |
| 1 | 62.10060 | 17.23720 | 1.84666 | 23.8 |
| 2 | 117.48310 | 0.20000 | | |
| 3 | 52.58770 | 3.00000 | 1.75500 | 52.3 |
| 4 | 31.13280 | 5.53700 | | |
| 5 | 38.31290 | 2.00000 | 1.75500 | 52.3 |
| 6 | 24.28050 | 25.67270 | | |
| 7 | -31.50350 | 16.97960 | 1.61800 | 63.4 |
| 8 | -17.72410 | 0.20000 | | |
| 9 | -18.44050 | 2.00000 | 1.86966 | 20.0 |
| 10 | -128.73830 | 2.36030 | | |
| 11 | -62.10670 | 8.00020 | 1.72916 | 54.7 |
| 12 | -29.98070 | 0.20000 | | |
| 13 | 723.51930 | 10.53090 | 1.72916 | 54.7 |
| 14 | -67.36130 | 0.20000 | | |
| 15 | 63.93130 | 18.79280 | 1.49700 | 81.6 |
| 16 | -186.02040 | 25.85520 | | |
| 17 | -72.35430 | 3.00000 | 1.84666 | 23.8 |
| 18 | 103.09840 | 12.77120 | | |
| 19 | -646.54890 | 9.85320 | 1.92286 | 20.9 |
| 20 | -94.82400 | 0.20000 | | |
| 21 | 98.78960 | 9.84690 | 1.92286 | 20.9 |
| 22 | 302.64870 | 0.20000 | | |
| 23 | 54.23160 | 16.94130 | 1.92286 | 20.9 |
| 24 | 117.53140 | 30.98900 | | |
| 25 | -173.19500 | 10.00000 | 1.51680 | 64.2 |
| 26 | 32.15190 | 40.80510 | | |
| 27 | -48.03510 | 6.67700 | 1.61800 | 63.4 |
| 28 | -36.80380 | variable | | |

(continued)

| Surface data | | | | |
|---|---|---|---|---|
| SURFACE NUMBER | r | d | nd | vd |
| Object plane | ∞ (infinity) | | | |
| 29 | 137.46400 | 5.03070 | 1.49700 | 81.6 |
| 30 | -98.61440 | variable | | |
| 31 | -32.37700 | 1.50000 | 1.62299 | 58.1 |
| 32 | 121.79280 | 0.49410 | | |
| 33 | 121.24110 | 5.71220 | 1.49700 | 81.6 |
| 34 | -30.02530 | 0.20000 | | |
| 35 | 139.74600 | 3.18670 | 1.59410 | 60.5 |
| 36 | -139.74600 | variable | | |
| 37 (Aperture) | ∞ | 7.27610 | | |
| 38 | -41.61500 | 1.50000 | 1.67300 | 38.3 |
| 39 | 67.80020 | 8.99980 | | |
| 40 | 111.55130 | 5.69400 | 1.68960 | 31.1 |
| 41 | -49.96980 | 2.00000 | | |
| 42 | 130.73840 | 1.50000 | 1.51680 | 64.2 |
| 43 | 44.22850 | 9.38180 | | |
| 44 | -25.60260 | 2.00000 | 1.67300 | 38.3 |
| 45 | -130.11220 | 0.20000 | | |
| 46 | -152.23890 | 9.91840 | 1.49700 | 81.6 |
| 47 | -30.50000 | 0.20000 | | |
| 48 | 1019.93630 | 7.38110 | 1.49700 | 81.6 |
| 49 | -65.66800 | 0.20000 | | |
| 50 | 71.76490 | 8.94560 | 1.49700 | 81.6 |
| 51 | -211.98930 | variable | | |
| 52 | ∞ | 91.00000 | 1.51680 | 64.2 |
| 53 | ∞ | 1.00000 | | |
| 54 | ∞ | 1.10000 | 1.50997 | 62.2 |
| 55 | ∞ | 1.00000 | | |
| 56 | ∞ | 3.00000 | 1.50847 | 61.2 |
| 57 | ∞ | BF | | |
| Image plane | ∞ | | | |

[Table 14]

| Various data | | | |
|---|---|---|---|
| Zoom ratio | 1.19902 | | |
| | WIDE-ANGLE | INTERMEDIATE | TELEPHOTO |
| Focal length | -16.3759 | -17.8595 | -19.6349 |
| F number | -2.50645 | -2.51453 | -2.52382 |

(continued)

|  | WIDE-ANGLE | INTERMEDIATE | TELEPHOTO |
|---|---|---|---|
| Angle of view | -44.7313 | -42.2540 | -39.6167 |
| Image height | 16.0900 | 16.0900 | 16.0900 |
| Total length of lens | 520.0187 | 520.0241 | 520.0239 |
| BF | 1.01860 | 1.02499 | 1.02375 |
| d28 | 27.5750 | 15.3660 | 2.2240 |
| d30 | 12.4330 | 21.7430 | 29.6270 |
| d36 | 5.4470 | 5.9240 | 8.3330 |
| d51 | 15.0750 | 17.4960 | 20.3460 |
| Position of entrance pupil | 43.9591 | 44.2272 | 44.6849 |
| Position of exit pupil | -819.7821 | -822.2031 | -825.0531 |
| Position of front principal point | 27.2565 | 25.9802 | 24.5832 |
| Position of rear principal point | 536.3065 | 537.7788 | 539.5321 |

[Table 15]

| Single lens data | | |
|---|---|---|
| Lens element | First surface | Focal length |
| 1 | 1 | 136.1621 |
| 2 | 3 | -107.5405 |
| 3 | 5 | -93.5414 |
| 4 | 7 | 44.5855 |
| 5 | 9 | -24.9598 |
| 6 | 11 | 71.9340 |
| 7 | 13 | 84.9908 |
| 8 | 15 | 98.1843 |
| 9 | 17 | -49.8257 |
| 10 | 19 | 119.3863 |
| 11 | 21 | 155.3213 |
| 12 | 23 | 96.6910 |
| 13 | 25 | -51.6162 |
| 14 | 27 | 207.5701 |
| 15 | 29 | 116.3597 |
| 16 | 31 | -40.9031 |
| 17 | 33 | 49.0366 |
| 18 | 35 | 118.1132 |
| 19 | 38 | -38.1066 |
| 20 | 40 | 50.7751 |
| 21 | 42 | -130.1043 |
| 22 | 44 | -47.7295 |
| 23 | 46 | 74.7224 |

(continued)

| Single lens data | | |
| --- | --- | --- |
| Lens element | First surface | Focal length |
| 24 | 48 | 124.4179 |
| 25 | 50 | 109.0182 |

[Table 16]

| Zoom lens group data | | | | | |
| --- | --- | --- | --- | --- | --- |
| Gr. | 1st. surf. | Focal length | Length of lens group | Position of front principal point | Position of rear principal point |
| 1 | 1 | 37.52596 | 280.04960 | 89.91927 | 137.00185 |
| 2 | 29 | 116.35966 | 5.03070 | 1.97071 | 3.61694 |
| 3 | 31 | 133.50811 | 11.09300 | 18.86469 | 24.68595 |
| 4 | 37 | 62.97660 | 65.19680 | 58.32080 | 114.07676 |

[Table 17]

| Zoom lens group magnification ratio | | | | |
| --- | --- | --- | --- | --- |
| Gr. | 1st. surf. | WIDE-ANGLE | INTERMEDIATE | TELEPHOTO |
| 1 | 1 | -0.01229 | -0.01229 | -0.01229 |
| 2 | 29 | -6.37709 | -19.27282 | 16.37830 |
| 3 | 31 | 0.13919 | 0.05448 | -0.07827 |
| 4 | 37 | 0.49306 | 0.45451 | 0.40928 |

[Table 18]

| Focus data | | | |
| --- | --- | --- | --- |
| Object distance: 1800mm | | | |
| Surface | WIDE-ANGLE | INTERMEDIATE | TELEPHOTO |
| 16 | 25.955 | 25.965 | 25.985 |
| 24 | 30.889 | 30.879 | 30.859 |
| 51 | 15.134 | 17.566 | 20.418 |
| Object distance: 20000mm | | | |
| Surface | WIDE-ANGLE | INTERMEDIATE | TELEPHOTO |
| 16 | 25.735 | 25.705 | 25.655 |
| 24 | 31.109 | 31.139 | 31.189 |
| 51 | 15.000 | 17.416 | 20.234 |

(Numerical Example 4)

Regarding the zoom lens system of Numerical Example 4 (corresponding to Example 4), Table 19 shows surface data, Table 20 shows various data, Table 21 shows single lens data, Table 22 shows zoom lens group data, and Table 23 shows zoom lens group magnification ratios, and Table 24 shows focus data (unit: mm).

[Table 19]

| Surface data | | | | |
|---|---|---|---|---|
| SURFACE NUMBER | r | d | nd | vd |
| Object plane | ∞ (infinity) | | | |
| 1 | 56.49050 | 11.06710 | 1.84666 | 23.8 |
| 2 | 104.64010 | 0.20000 | | |
| 3 | 41.19000 | 3.88520 | 1.48749 | 70.4 |
| 4 | 22.34010 | 4.90230 | | |
| 5 | 33.88850 | 3.55600 | 1.48749 | 70.4 |
| 6 | 15.66570 | 8.52690 | | |
| 7 | ∞ | 9.49420 | 1.51680 | 64.2 |
| 8 | ∞ | 2.18420 | | |
| 9 | -34.63080 | 13.00000 | 1.61800 | 63.4 |
| 10 | -16.69180 | 0.20000 | | |
| 11 | -17.91940 | 2.00000 | 1.86966 | 20.0 |
| 12 | -105.27310 | 1.51940 | | |
| 13 | -54.88750 | 7.23810 | 1.72916 | 54.7 |
| 14 | -27.58800 | 0.20000 | | |
| 15 | -527.35320 | 9.47890 | 1.72916 | 54.7 |
| 16 | -53.63320 | 0.20000 | | |
| 17 | 59.94710 | 18.06860 | 1.49700 | 81.6 |
| 18 | -143.77150 | 15.31410 | | |
| 19 | -77.53650 | 3.00000 | 1.84666 | 23.8 |
| 20 | 98.92800 | 10.42090 | | |
| 21 | 2869.35420 | 10.64240 | 1.92286 | 20.9 |
| 22 | -98.04710 | 15.30830 | | |
| 23 | 82.71770 | 10.64700 | 1.92286 | 20.9 |
| 24 | 171.52070 | 0.20000 | | |
| 25 | 60.35400 | 15.56360 | 1.92286 | 20.9 |
| 26 | 122.78520 | 33.73010 | | |
| 27 | -120.02970 | 9.55140 | 1.51680 | 64.2 |
| 28 | 41.43260 | 39.77660 | | |
| 29 | -69.02410 | 5.49760 | 1.61800 | 63.4 |
| 30 | -41.84730 | variable | | |
| 31 | 157.62190 | 5.38760 | 1.49700 | 81.6 |
| 32 | -124.12780 | variable | | |
| 33 | -33.36300 | 1.50000 | 1.62299 | 58.1 |
| 34 | 91.93230 | 3.03350 | | |
| 35 | 108.35890 | 7.43790 | 1.43700 | 95.1 |
| 36 | -30.34760 | 1.58780 | | |
| 37 | 141.90710 | 3.42260 | 1.59410 | 60.5 |

(continued)

| Surface data | | | | |
|---|---|---|---|---|
| SURFACE NUMBER | r | d | nd | vd |
| Object plane | ∞ (infinity) | | | |
| 38 | -141.90710 | variable | | |
| 39 (Aperture) | ∞ | 13.24640 | | |
| 40 | -41.86620 | 1.50000 | 1.67300 | 38.3 |
| 41 | 89.16350 | 6.33540 | | |
| 42 | 135.66320 | 5.63360 | 1.68960 | 31.1 |
| 43 | -45.05550 | 2.00000 | | |
| 44 | 111.58430 | 1.50000 | 1.51680 | 64.2 |
| 45 | 46.33850 | 9.58820 | | |
| 46 | -26.24840 | 2.00000 | 1.67300 | 38.3 |
| 47 | -137.54020 | 0.20000 | | |
| 48 | -122.43330 | 9.26370 | 1.49700 | 81.6 |
| 49 | -29.85320 | 0.98930 | | |
| 50 | 132.79680 | 8.70060 | 1.49700 | 81.6 |
| 51 | -83.92500 | 0.20480 | | |
| 52 | 77.39480 | 7.26510 | 1.49700 | 81.6 |
| 53 | -714.54460 | variable | | |
| 54 | ∞ | 91.00000 | 1.51680 | 64.2 |
| 55 | ∞ | 1.00000 | | |
| 56 | ∞ | 1.10000 | 1.50997 | 62.2 |
| 57 | ∞ | 1.00000 | | |
| 58 | ∞ | 3.00000 | 1.50847 | 61.2 |
| 59 | ∞ | BF | | |
| Image plane | ∞ | | | |

[Table 20]

| Various data | | | |
|---|---|---|---|
| Zoom ratio | 1.21048 | | |
| | WIDE-ANGLE | INTERMEDIATE | TELEPHOTO |
| Focal length | -16.2938 | -17.8357 | -19.7233 |
| F number | -2.50557 | -2.51144 | -2.51857 |
| Angle of view | -44.8595 | -42.3092 | -39.5365 |
| Image height | 16.0900 | 16.0900 | 16.0900 |
| Total length of lens | 520.0251 | 520.0262 | 520.0208 |
| BF | 1.02475 | 1.02682 | 1.02042 |
| d30 | 30.8770 | 16.8750 | 2.0000 |
| d32 | 14.7860 | 24.4910 | 31.6890 |
| d38 | 4.9990 | 7.4360 | 12.9260 |

(continued)

| Various data | | | |
|---|---|---|---|
| Zoom ratio | 1.21048 | | |
| | WIDE-ANGLE | INTERMEDIATE | TELEPHOTO |
| d53 | 15.0690 | 16.9280 | 19.1160 |
| Position of entrance pupil | 30.2453 | 30.5800 | 31.0831 |
| Position of exit pupil | -822.6516 | -824.5106 | -826.6986 |
| Position of front principal point | 13.6291 | 12.3589 | 10.8898 |
| Position of rear principal point | 536.2313 | 537.7569 | 539.6158 |

[Table 21]

| Single lens data | | |
|---|---|---|
| Lens element | First surface | Focal length |
| 1 | 1 | 131.1770 |
| 2 | 3 | -107.3931 |
| 3 | 5 | -63.8446 |
| 4 | 7 | ∞ |
| 5 | 9 | 40.8376 |
| 6 | 11 | -25.0991 |
| 7 | 13 | 68.4207 |
| 8 | 15 | 81.1973 |
| 9 | 17 | 87.7075 |
| 10 | 19 | -50.9431 |
| 11 | 21 | 102.9094 |
| 12 | 23 | 163.7019 |
| 13 | 25 | 114.8772 |
| 14 | 27 | -58.4215 |
| 15 | 29 | 159.6468 |
| 16 | 31 | 140.6158 |
| 17 | 33 | -39.1132 |
| 18 | 35 | 55.1506 |
| 19 | 37 | 119.9693 |
| 20 | 40 | -42.1377 |
| 21 | 42 | 49. 6788 |
| 22 | 44 | -154.5563 |
| 23 | 46 | -48.5518 |
| 24 | 48 | 76.8822 |
| 25 | 50 | 104.8696 |
| 26 | 52 | 140.9353 |

[Table 22]

| Zoom lens group data | | | | | |
|---|---|---|---|---|---|
| Gr. | 1st. surf. | Focal length | Length of lens group | Position of front principal point | Position of rear principal point |
| 1 | 1 | 43.25754 | 265.37290 | 83.32192 | 102.61386 |
| 2 | 31 | 140.61576 | 5.38760 | 2.02625 | 3.79192 |
| 3 | 33 | 158.39927 | 16.98180 | 37.35177 | 49.87263 |
| 4 | 39 | 68.51708 | 68.42710 | 62.99306 | 106.88947 |

[Table 23]

| Zoom lens group magnification ratio | | | | |
|---|---|---|---|---|
| Gr. | 1st. surf. | WIDE-ANGLE | INTERMEDIATE | TELEPHOTO |
| 1 | 1 | -0.01423 | -0.01423 | -0.01423 |
| 2 | 31 | -12.58479 | 49.71329 | 7.94281 |
| 3 | 33 | 0.07861 | -0.02345 | -0.17828 |
| 4 | 39 | 0.38200 | 0.35484 | 0.32300 |

[Table 24]

| Focus data | | | |
|---|---|---|---|
| Object distance: 1800mm | | | |
| Surface | WIDE-ANGLE | INTERMEDIATE | TELEPHOTO |
| 16 | 15.454 | 15.454 | 15.454 |
| 24 | 33.590 | 33.590 | 33.590 |
| 51 | 15.123 | 16.988 | 19.184 |
| Object distance: 20000mm | | | |
| Surface | WIDE-ANGLE | INTERMEDIATE | TELEPHOTO |
| 16 | 15.154 | 15.114 | 15.074 |
| 24 | 33.890 | 33.930 | 33.970 |
| 51 | 15.000 | 16.853 | 19.013 |

Table 25 below shows the corresponding values of the respective conditional expressions (1) to (8) in the respective Numerical Examples.

[Table 25]

| Condition | Expression | Ex. 1 | Ex. 2 | Ex. 3 | Ex. 4 |
|---|---|---|---|---|---|
| (1) | f1/f2 | 1.35 | 1.07 | 1.33 | 1.18 |
| (2) | (L1R2+L1R1)/(L1R2-L1R1) | 3.34 | 2.69 | 3.24 | 3.35 |
| (3) | \|L1f/fw\| | 8.47 | 6.09 | 8.31 | 8.05 |
| (4) | vdm-vds | 2.90 | - | 2.90 | 2.90 |
| (5) | \|tfp/fw\| | - | - | - | 0.58 |

Table 26 below shows the corresponding values of the respective conditional expressions (1) to (8) in the respective Numerical Examples.

[Table 26]

| Var. | Ex. 1 | Ex. 2 | Ex. 3 | Ex. 4 |
|---|---|---|---|---|
| f1 | 37.4 | 32.2 | 37.4 | 37.5 |
| f2 | 27.8 | 30.0 | 28.1 | 31.9 |
| L1R1 | 62.1 | 49.2 | 62.1 | 56.5 |
| L1R2 | 115.0 | 107.5 | 117.5 | 104.6 |
| L1f | 138.7 | 99.3 | 136.2 | 131.2 |
| fw | -16.4 | -16.3 | -16.4 | -16.3 |
| vdm | 23.8 | - | 23.8 | 23.8 |
| vds | 20.9 | - | 20.9 | 20.9 |
| tfp | - | - | - | 9.5 |

Note: f1 is a focal length of the magnification optical system,
f2 is a focal length of the relay optical system,
L1R1 is a radius of curvature of the surface on the magnification side of the first lens element,
L1R2 is a radius of curvature of the surface on the reduction side of the first lens element,
L1f is a focal length of the first lens element,
fw is a focal length at a wide-angle end of the optical system in total,
vdm is an Abbe number of the lens element positioned closest to the magnification side of the field curvature correction lens group,
vds is an Abbe number of the lens element positioned closest to the reduction side of the field curvature correction lens group, and
tfp is a thickness of the zero-power element.

(Second Embodiment)

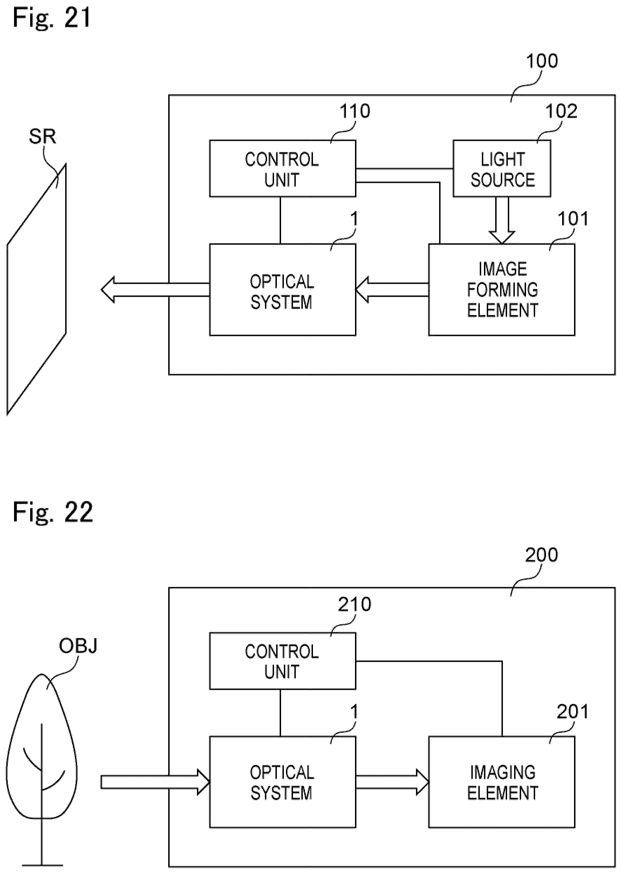

Hereinafter, a second embodiment of the present disclosure is described with reference to Fig. 21. Fig. 21 is a block diagram showing an example of the image projection apparatus according to the present disclosure. The image projection apparatus 100 includes such an optical system 1 as disclosed in the first embodiment, an image forming element 101, a light source 102, a control unit 110, and others. The image forming element 101 is constituted of, for example, liquid crystal or DMD, for generating an image to be projected through the optical system 1 onto a screen SR. The light source 102 is constituted of such as a light emitting diode (LED) or a laser, and supplies light to the image forming element 101. The control unit 110 is constituted of, for example, central processing unit (CPU) or micro-processing unit (MPU), for controlling the entire apparatus and respective components. The optical system 1 may be configured as an interchangeable lens that can be detachably attached to the image projection apparatus 100. In this case, an apparatus in which the optical system 1 is removed from the image projection apparatus 100 is an example of a main body apparatus.
The image projection apparatus 100 described above can realize a wide-angle zoom function while achieving reduction in size and weight of the apparatus by employing the optical system 1 according to the first embodiment.

(Third Embodiment)

Hereinafter, a third embodiment of the present disclosure is described with reference to Fig. 22. Fig. 22 is a block diagram showing an example of the imaging apparatus according to the present disclosure. The imaging apparatus 200 includes such an optical system 1 as disclosed in the first embodiment, an imaging element 201, a control unit 210, and others. The imaging element 201 is constituted of, for example, charge coupled device (CCD) image sensor or complementary metal oxide semiconductor (CMOS) image sensor, for receiving an optical image of an object OBJ formed by the optical system 1 to convert the image into an electrical image signal. The control unit 110 is constituted of, for example, CPU or MPU, for controlling the entire apparatus and respective components. The optical system 1 may be configured as an interchangeable lens that can be detachably attached to the imaging apparatus 200. In this case, an apparatus in which the optical system 1 is removed from the imaging apparatus 200 is an example of a main body apparatus.
The imaging apparatus 200 described above can realize a wide-angle zoom function while achieving reduction in size and weight of the apparatus by employing the optical system 1 according to the first embodiment.
As described above, the embodiments have been described to disclose the technology in the present disclosure.

To that end, the accompanying drawings and detailed description are provided.

Therefore, among the components described in the accompanying drawings and the detailed description, not only the components that are essential for solving the problem, but also the components that are not essential for solving the problem may also be included in order to exemplify the above-described technology. Therefore, it should not be directly appreciated that the above non-essential components are essential based on the fact that the non-essential components are described in the accompanying drawings and the detailed description.

Further, the above-described embodiments have been described to exemplify the technology in the present disclosure. Thus, various modification, substitution, addition, omission and so on can be made within the scope of the claims or equivalents thereof.

(INDUSTRIAL APPLICABILITY)

The present disclosure can be applied to image projection apparatuses such as projectors and head-up displays, and imaging apparatuses such as digital still cameras, digital video cameras, surveillance cameras in surveillance systems, web cameras, and onboard cameras. In particular, the present disclosure can be applied to optical systems that require a high image quality, such as projectors, digital still camera systems, and digital video camera systems.

**Claims**

1. An optical system internally having an intermediate imaging position that is conjugate with each of a magnification conjugate point on a magnification side and a reduction conjugate point on a reduction side, the optical system comprising:

    a magnification optical system including a plurality of lens elements and positioned on the magnification side with respect to the intermediate imaging position; and
    a relay optical system including a plurality of lens elements and positioned on the reduction side with respect to the intermediate imaging position;
    wherein a first lens element positioned closest to the magnification side of the magnification optical system has a positive power, and
    the optical system satisfies the following condition (1):

$$0.9 \leq f1/f2 \leq 1.5 \quad \cdots (1)$$

    where f1 is a focal length of the magnification optical system, and f2 is a focal length of the relay optical system.

2. The optical system according to Claim 1, satisfying the following condition (2):

$$2.0 < (L1R2+L1R1)/(L1R2-L1R1) < 5.0 \quad \cdots (2)$$

    where L1R1 is a radius of curvature of the surface on the magnification side of the first lens element, and L1R2 is a radius of curvature of the surface on the reduction side of the first lens element.

3. The optical system according to Claim 1, wherein the first lens element has a refractive index of 1.8 or more.

4. The optical system according to Claim 1, wherein the magnification optical system includes a second lens element having a negative power and a third lens element having a negative power in order from the magnification side to the reduction side, following the first lens element having a positive power.

5. The optical system according to Claim 4, wherein only the first lens element, the second lens element, and the third lens element are arranged as optical elements having a power in a range from the surface on the magnification side of the first lens element to a position where a most off-axis light ray intersects an optical axis of the magnification optical system.

6. The optical system according to Claim 1, wherein surface shapes of the plurality of lens elements constituting the magnification optical system and the plurality of lens elements constituting the relay optical system are spherical or planar.

7. The optical system according to Claim 1, satisfying the following condition (3):

$$5 < |L1f/fw| < 10 \quad \cdots(3)$$

where L1f is a focal length of the first lens element, and fw is a focal length at a wide-angle end of the optical system in total.

8. The optical system according to Claim 1, wherein the magnification optical system includes a field curvature correction lens group having a positive power adjacent to the magnification side of the intermediate imaging position, and wherein, during performing field curvature correction operation, the field curvature correction lens group is moving along the optical axis of the magnification optical system, while both of a lens element positioned on the magnification side with respect to the field curvature correction lens group and the relay optical system remain stationary.

9. The optical system according to Claim 8, wherein, in the field curvature correction lens group, the lens element positioned closest to the magnification side has a negative power, and the lens element positioned closest to the reduction side has a positive power.

10. The optical system according to Claim 9, satisfying the following condition (4):

$$-5 < vdm-vds < 5 \quad \cdots(4)$$

where vdm is an Abbe number of the lens element positioned closest to the magnification side of the field curvature correction lens group, and vds is an Abbe number of the lens element positioned closest to the reduction side of the field curvature correction lens group.

11. The optical system according to Claim 1, wherein the relay optical system includes, in order from the magnification side to the reduction side, a first relay lens group having a negative power, a second relay lens group having a positive power, a third relay lens group having a positive power, and a fourth relay lens group having a positive power, and wherein, during performing zooming operation from the wide-angle end to the telephoto end, the magnification optical system and the first relay lens group remain stationary, and the second relay lens group, the third relay lens group, and the fourth relay lens group are moving to the magnification side.

12. The optical system according to Claim 4, wherein a zero-power element having a refractive index larger than 1 is positioned on the reduction side of the third lens element.

13. The optical system according to Claim 12, satisfying the following condition (5):

$$|tfp/fw| < 1.1 \quad \cdots(5)$$

where tfp is a thickness of the zero-power element, and fw is a focal length at the wide-angle end of the optical system in total.

14. An image projection apparatus comprising:

   the optical system according to any one of Claims 1 to 13; and
   an image forming element that generates an image to be projected through the optical system onto a screen.

15. An imaging apparatus comprising:

   the optical system according to any one of Claims 1 to 13; and
   an imaging element that receives an optical image formed by the optical system to convert the optical image into an electrical image signal.

Fig. 1

EP 4 542 281 A1

EP 4 542 281 A1

Fig. 2A

Fig. 2B

Fig. 2C

Op OI

L1 L2 L3 L4 L5 L6 L7 L8 L9 L10 L11 L12 L13 L14 L15 L16 L17 L18 L19 L20 L21 L22 L23 L24 L25 A P1 P2 P3 S

G1(+) G2(+) G3(+) G4(+)

F -2.51    H= 16.09    H= 16.09

Fig. 3A

-0.10  0.0  0.10    -0.10  0.0  0.10    -5.0  0.0  5.0
SA(mm)    AST(mm)    DIS(%)

F -2.51    H= 16.09    H= 16.09

Fig. 3B

-0.10  0.0  0.10    -0.10  0.0  0.10    -5.0  0.0  5.0
SA(mm)    AST(mm)    DIS(%)

F -2.52    H= 16.09    H= 16.09

Fig. 3C

-0.10  0.0  0.10    -0.10  0.0  0.10    -5.0  0.0  5.0
SA(mm)    AST(mm)    DIS(%)

——————— d-line         ——————— s
------- F-line         ------- m
— — — C-line

Fig. 4A

F -2.51

-0.10    0.0    0.10
SA(mm)

H= 16.09

-0.10    0.0    0.10
AST(mm)

H= 16.09

-5.0    0.0    5.0
DIS(%)

Fig. 4B

F -2.51

-0.10    0.0    0.10
SA(mm)

H= 16.09

-0.10    0.0    0.10
AST(mm)

H= 16.09

-5.0    0.0    5.0
DIS(%)

Fig. 4C

F -2.52

-0.10    0.0    0.10
SA(mm)

H= 16.09

-0.10    0.0    0.10
AST(mm)

H= 16.09

-5.0    0.0    5.0
DIS(%)

——————— d-line
- - - - - - - F-line
— — — — C-line

——————— s
- - - - - - - m

Fig. 5A

Fig. 5B

Fig. 5C

d-line
F-line
C-line

s
m

Fig. 6

EP 4 542 281 A1

Fig. 7A

Fig. 7B

Fig. 7C

Fig. 8A

Fig. 8B

Fig. 8C

| | |
|---|---|
| d-line | s |
| F-line | m |
| C-line | |

Fig. 9A

Fig. 9B

Fig. 9C

F -2.51   H= 14.00   H= 14.00

SA(mm)   AST(mm)   DIS(%)

-0.10   0.0   0.10
-0.10   0.0   0.10
-5.0   0.0   5.0

——————— d-line
- - - - - - - F-line
— — — — C-line

——————— s
- - - - - - - m

Fig. 10A

F -2.51          H= 14.00          H= 14.00

-0.10   0.00   0.10     -0.10   0.00   0.10     -5.0   0.0   5.0
    SA(mm)                  AST(mm)                 DIS(%)

Fig. 10B

F -2.51          H= 14.00          H= 14.00

-0.10   0.00   0.10     -0.10   0.00   0.10     -5.0   0.0   5.0
    SA(mm)                  AST(mm)                 DIS(%)

Fig. 10C

F -2.51          H= 14.00          H= 14.00

-0.10   0.00   0.10     -0.10   0.00   0.10     -5.0   0.0   5.0
    SA(mm)                  AST(mm)                 DIS(%)

———————— d-line              ———————— s
- - - - - - - F-line          - - - - - - - m
— — — — C-line

Fig. 11

Fig. 12A

Fig. 12B

Fig. 12C

Fig. 13A

Fig. 13B

Fig. 13C

d-line
F-line
C-line

s
m

Fig. 14A

F -2.51    H= 16.09    H= 16.09

-0.10  0.00  0.10    -0.10  0.00  0.10    -5.0  0.0  5.0
SA(mm)              AST(mm)              DIS(%)

Fig. 14B

F -2.51    H= 16.09    H= 16.09

-0.10  0.00  0.10    -0.10  0.00  0.10    -5.0  0.0  5.0
SA(mm)              AST(mm)              DIS(%)

Fig. 14C

F -2.52    H= 16.09    H= 16.09

-0.10  0.00  0.10    -0.10  0.00  0.10    -5.0  0.0  5.0
SA(mm)              AST(mm)              DIS(%)

———————— d-line        ———————— s
- - - - - - - F-line    - - - - - - - m
— — — — C-line

Fig. 15A

F -2.51

-0.10    0.00    0.10
SA(mm)

H= 16.09

-0.10    0.0    0.10
AST(mm)

H= 16.09

-5.0    0.0    5.0
DIS(%)

Fig. 15B

F -2.51

-0.10    0.00    0.10
SA(mm)

H= 16.09

-0.10    0.0    0.10
AST(mm)

H= 16.09

-5.0    0.0    5.0
DIS(%)

Fig. 15C

F -2.52

-0.10    0.0    0.10
SA(mm)

H= 16.09

-0.10    0.0    0.10
AST(mm)

H= 16.09

-5.0    0.0    5.0
DIS(%)

———— d-line
- - - - - F-line
— — — C-line

———— s
- - - - - m

Fig. 16

Fig. 17A

Fig. 17B

Fig. 17C

Fig. 18A

F -2.51

-0.10   0.00   0.10
SA(mm)

H= 16.09

-0.10   0.00   0.10
AST(mm)

H= 16.09

-5.0   0.0   5.0
DIS(%)

Fig. 18B

F -2.51

-0.10   0.00   0.10
SA(mm)

H= 16.09

-0.10   0.00   0.10
AST(mm)

H= 16.09

-5.0   0.0   5.0
DIS(%)

Fig. 18C

F -2.52

-0.10   0.00   0.10
SA(mm)

H= 16.09

-0.10   0.00   0.10
AST(mm)

H= 16.09

-5.0   0.0   5.0
DIS(%)

————— d-line
– – – – – F-line
— — — — C-line

————— s
– – – – – – m

Fig. 19A

F -2.51

-0.10    0.10
SA(mm)

H= 16.09

-0.10    0.00    0.10
AST(mm)

H= 16.09

-5.0    0.0    5.0
DIS(%)

Fig. 19B

F -2.51

-0.10    0.00    0.10
SA(mm)

H= 16.09

-0.10    0.00    0.10
AST(mm)

H= 16.09

-5.0    0.0    5.0
DIS(%)

Fig. 19C

F -2.52

-0.10    0.00    0.10
SA(mm)

H= 16.09

-0.10    0.00    0.10
AST(mm)

H= 16.09

-5.0    0.0    5.0
DIS(%)

———————— d-line
- - - - - - - F-line
— — — — C-line

———————— s
- - - - - - - m

Fig. 20A

F -2.51
H= 16.09
H= 16.09

-0.10    0.0    0.10
SA(mm)

-0.10    0.0    0.10
AST(mm)

-5.0    0.0    5.0
DIS(%)

Fig. 20B

F -2.51
H= 16.09
H= 16.09

-0.10    0.0    0.10
SA(mm)

-0.10    0.0    0.10
AST(mm)

-5.0    0.0    5.0
DIS(%)

Fig. 20C

F -2.52
H= 16.09
H= 16.09

-0.10    0.0    0.10
SA(mm)

-0.10    0.0    0.10
AST(mm)

-5.0    0.0    5.0
DIS(%)

——————— d-line
- - - - - - - F-line
— — — — C-line

——————— s
- - - - - - - m

Fig. 21

Fig. 22

## INTERNATIONAL SEARCH REPORT

| | International application No. |
|---|---|
| | **PCT/JP2023/006792** |

**A.    CLASSIFICATION OF SUBJECT MATTER**

**G02B 15/20**(2006.01)i; **G02B 13/16**(2006.01)i; **G02B 15/167**(2006.01)i
FI:    G02B15/20; G02B13/16; G02B15/167

According to International Patent Classification (IPC) or to both national classification and IPC

**B.    FIELDS SEARCHED**

Minimum documentation searched (classification system followed by classification symbols)

G02B15/20; G02B13/16; G02B15/167

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-157209 A (YABE, Teru) 28 August 2014 (2014-08-28) examples 2, 8 | 1, 6, 14-15 |
| A | examples 2, 8 | 2-5, 7-13 |
| A | JP 2015-219506 A (RICOH CO LTD) 07 December 2015 (2015-12-07) entire text, all drawings | 1-15 |
| A | JP 2015-158587 A (RICOH CO LTD) 03 September 2015 (2015-09-03) entire text, all drawings | 1-15 |
| A | US 05677797 A (U.S. PRECISION LENS INC.) 14 October 1997 (1997-10-14) entire text, all drawings | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **13 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2023/006792**

| Patent document cited in search report | | | Publication date (day/month/year) | Patent family member(s) | | | Publication date (day/month/year) |
|---|---|---|---|---|---|---|---|
| JP | 2014-157209 | A | 28 August 2014 | US 2015/0362712 A1 examples 2, 8 WO 2014/125533 A1 EP 2933672 A1 TW 201502571 A CN 104937471 A KR 10-2015-0117656 A | | | |
| JP | 2015-219506 | A | 07 December 2015 | (Family: none) | | | |
| JP | 2015-158587 | A | 03 September 2015 | (Family: none) | | | |
| US | 05677797 | A | 14 October 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018097046 A
- JP 2019132904 A